# EUROPEAN PATENT SPECIFICATION

(11) **EP 4 035 758 B1**
(45) Date of publication and mention of the grant of the patent: **26.07.2023**
(21) Application number: 22153454.8
(22) Date of filing: 26.01.2022
(51) Int. Cl.: B01D 46/18, B01D 46/44, B01D 46/681, B01D 46/682, B01D 46/69, B01D 46/72, B01D 46/79

(54) **FILTER CLEANING SYSTEM, FILTER CLEANING METHOD, AND DATA CENTER**
FILTERREINIGUNGSSYSTEM, FILTERREINIGUNGSVERFAHREN UND DATENZENTRUM
SYSTÈME DE NETTOYAGE DE FILTRE, PROCÉDÉ DE NETTOYAGE DE FILTRE ET CENTRE DE DONNÉES

(30) Priority: 29.01.2021 CN 202110129295
(43) Date of publication of application: 03.08.2022
(73) Proprietor: Huawei Digital Power Technologies Co., Ltd., Shenzhen, 518043 (CN)
(72) Inventor: LUO, Long, Shenzhen, 518129 (CN); WU, Bingjin, Shenzhen, 518129 (CN); LI, Jigang, Shenzhen, 518129 (CN)
(74) Representative: Pfenning, Meinig & Partner mbB

(56) References cited:
- CN-A- 109 026 395
- CN-A- 110 657 540
- CN-U- 208 845 273

## Description

### TECHNICAL FIELD

This application relates to the field of filter technologies, and in particular, to a filter cleaning system, a filter cleaning method, and a data center.

### BACKGROUND

Air filters are disposed in many ventilating devices and air conditioning devices, and are configured to filter air flowing through the air filters, to obtain cleaner air. For example, an air filter is disposed at an air inlet of an air conditioner. After a period of time of use, due to a high air speed and a large air volume at the outdoor air inlet, the air filter easily sucks in a large amount of catkins and hair in the season of catkins, causing the air filter to be clogged. It is difficult to clean and dredge the air filter in time in a conventional technology. Continuous refrigeration of the air conditioner unit cannot be implemented, resulting in a high temperature of a server in an IT room. In an existing solution, one way is to adsorb dirt on the filter by using a suction mechanism, but gravels or winged insects in meshes of the filter are not easily adsorbed, and the other way is to directly replace the filter clogged by dirt. A stepmotor is used to drive a collection mandrel and a release mandrel to rotate. The collection mandrel collects the filter clogged by dirt, and the release mandrel releases a second filter to replace the filter. However, in some cases, the filter can be used again only after cleaning, and costs of directly replacing the filter are relatively high.
CN 208 845 273 U discloses a self-cleaning willow catkin preventing device. The device comprises a structural frame, anair inlet channel is formed in the structural frame, the air inlet channel comprises an air inlet and an air outlet, a willow catkin preventing net for separating the air inlet from the air outlet isarranged in the air inlet channel, a winding drum mechanism for winding the willow catkin preventing net is arranged in the air inlet channel, and a control system for controlling the winding drum mechanism to work is arranged on the air inlet channel; differential pressure detection modules are arranged on the air inlet channel and located on the two sides of the willow catkin prevention net; a cleaning channel is arranged below the air inlet channel, a high-pressure air injection device is arranged in the cleaning channel and controlled by the differential pressure detection module to work, and an air outlet of the high-pressure air injection device faces the catkin prevention net. Whether the willow catkin preventing net needs to be cleaned or not can be automatically detected through the pressure difference detection module, winding of the willow catkin preventing net is controlled through the winding drum mechanism, the cleaning process is automatically completed.
CN 109 026 395 A discloses a self-cleaning catkin blocking device and relates to the technical field of catkin blocking devices. The self-cleaning catkin blocking device comprises a structure frame. The structure frame is provided with an air inlet channel. The air inlet channel comprises an air inlet and an air outlet. The air inlet channel is internally provided with a catkin blocking net used for separating the air inlet and the air outlet and a coiling block mechanism used for coiling the catkin blocking net. The air inlet channel is provided with a control system used for controlling the coiling block mechanism to operate. Differential pressure detection modules are arranged in the positions, located on the two sides of the catkin blocking net, of the air inlet channel. A cleaning channel is arranged below the air inlet channel. The cleaning channel is internally provided with a high-pressure air injection device. The high-pressure air injection device is controlled to operate by the differential pressure detection modules. An air outlet of the high-pressure air injection device faces the catkin blocking net. The self-cleaning catkin blocking device can automatically detect whether the catkin blocking net needs to cleaned or not through the differential pressure detection modules, control coiling of the catkin blocking net through the coiling block mechanism and automatically complete the cleaning process and is simple in process and capable of saving manpower and material resources.
CN 110 657 540 A discloses a fresh air purification device. The device comprises a shell. The shell is provided with a fresh air inlet and a fresh air outlet. The fresh air purification device is characterized in that a primary filter net, an efficient filter net, a deduster, a dust collector and a fan are mounted inside the shell, the primary filter net and the efficient filter net are sequentially arranged in an air duct between the fresh air inlet and a fan air inlet, the deduster is used for removing dust adhering to the primary filter net, in addition, the removed dust is collected into the dust collector, and an air outlet of the fan communicates with the fresh air outlet.

### SUMMARY

The invention is defined by the independent claims. Preferable embodiments are defined by the dependent claims. This application provides a filter cleaning system that controls to select a filter cleaning manner based on a pressure parameter of two sides of a filter, to improve a filter cleaning effect and reduce costs.

According to a first aspect, this application provides a filter cleaning system, including a first filter, a first-stage cleaning unit, a sensing unit, and a control unit, where the filter cleaning system further includes a second-stage cleaning unit;
the first-stage cleaning unit includes at least an adsorption assembly, a washing assembly, and a brush assembly;
the second-stage cleaning unit includes a motor and a mandrel assembly, the mandrel assembly includes a first mandrel and a second filter wound on the first mandrel, and the motor is configured to drive the mandrel assembly to work, to replace at least one part of the first filter with a part of the second filter;
the sensing unit is configured to obtain a pressure parameter of two sides of the first filter; and
the control unit is configured to control, based on the pressure parameter, the first-stage cleaning unit and/or the second-stage cleaning unit to work.

The first-stage cleaning unit is configured to clean the first filter. The first filter in this application is a filter that is configured to filter air in the filter cleaning system. There is dirt on the first filter, and the dirt is an object to be cleaned by the filter cleaning system. The second-stage cleaning unit is configured to replace the first filter on which there is dirt. The second filter is a clean filter on which there is no dirt. That the control unit controls, based on the pressure parameter, the first-stage cleaning unit and/or the second-stage cleaning unit to work includes: the control unit controls, based on the pressure parameter, the first-stage cleaning unit to clean the first filter, or the control unit controls, based on the pressure parameter, the second-stage cleaning unit to replace the first filter, or after controlling, based on the pressure parameter, the first-stage cleaning unit to clean the first filter, the control unit controls, based on the pressure parameter, the second-stage cleaning unit to replace the first filter, to enable the filter configured to filter air to remain clean.

The adsorption assembly is configured to adsorb the dirt on the first filter. The dirt includes hair, catkins, dust, and the like. The washing assembly is configured to wash the first filter to remove the dirt on the first filter. The brush assembly is configured to brush the dirt on the first filter. When the first-stage cleaning unit includes the adsorption assembly, the washing assembly, and the brush assembly, the control unit may control, based on a size of the pressure parameter, performance parameters of the cleaning assemblies during cleaning, to achieve a relatively good cleaning effect.

In an implementation, when the first-stage cleaning unit is the adsorption assembly, the control unit may control at least one of adsorption parameters of the adsorption assembly, such as an adsorption force, an adsorption area, and an adsorption time based on the size of the pressure parameter, so that the adsorption assembly can effectively clean the first filter. For example, when the pressure parameter is relatively large, it indicates that there is a relatively large amount of dirt clogging the first filter. In this case, the adsorption force and the adsorption time may be set to be relatively large. When the pressure parameter is relatively small, it indicates that there is a relatively small amount of dirt clogging the first filter. In this case, the adsorption force and the adsorption time may be set to be relatively small, to further reduce cleaning energy consumption and costs when the first filter is cleaned, so that cleaning selection is more flexible.

In an implementation, when the first-stage cleaning unit is the washing assembly, the control unit may control at least one of washing parameters of the washing assembly, such as a liquid outlet speed of washing liquid, a washing time, and a quantity of times of washing based on the size of the pressure parameter, so that the washing assembly can efficiently clean the first filter. In some cases, the washing parameters may alternatively be controlled based on the pressure parameter, to save the washing liquid.

In an implementation, when the first-stage cleaning unit includes at least two of the adsorption assembly, the washing assembly, and the brush assembly, the control unit may control, based on the size of the pressure parameter, a cleaning sequence of the at least two of the adsorption assembly, the washing assembly, and the brush assembly, to better achieve an effect of cleaning the first filter. In an implementation, the control unit may control, based on the pressure parameter, the adsorption assembly and the brush assembly to clean the first filter at the same time, and the adsorption assembly and the brush assembly cooperate with each other to achieve a better cleaning effect.

The filter cleaning system in this application controls, based on the pressure parameter of the two sides of the first filter, the first-stage cleaning unit and/or the second-stage cleaning unit to work, so that in one aspect, a filter cleaning effect can be improved, and in a further aspect, a filter cleaning manner is more flexible to reduce costs. The filter cleaning system in this application may be applied to a data center. The data center includes a plurality of electronic products configured to process data or process signals, for example, a server. These electronic products heat up during work and need to be cooled by a fan. The filter cleaning system is located on an air inlet side of the fan to filter air. The filter cleaning system may also be applied to an electronic device such as an air conditioner, a heat exchanger, a blower, or an air exchanger. When the filter cleaning system is applied to the data center, air intake efficiency can be ensured, and the most energy-saving and efficient catkin-proof and anti-clogging effects can be finally achieved. This can avoid a failure of the data center to maintain an effective air inlet volume after the filter cleaning system is clogged due to late manual maintenance. This can also avoid frequent replacement and maintenance of the filter in the season of catkin outbreak, thereby saving manpower and material resources. When the filter cleaning system is applied to the electronic device such as the air conditioner, continuous and efficient operation of the electronic device such as the air conditioner can be ensured.

The control unit includes a pressure obtaining subunit, a determining subunit, and an execution subunit, the determining subunit is in a signal connection to the pressure obtaining subunit and the execution subunit, the pressure obtaining subunit is in a signal connection to the sensing unit, the first-stage cleaning unit includes the adsorption assembly and the washing assembly, and the execution subunit is electrically connected to the adsorption assembly and the washing assembly; and that the control unit is configured to control, based on the pressure parameter, the first-stage cleaning unit and/or the second-stage cleaning unit to work includes:
the pressure obtaining subunit is configured to obtain a first pressure difference between the two sides of the first filter, the determining subunit is configured to determine whether the first pressure difference is greater than a first preset pressure difference, and when the first pressure difference is greater than the first preset pressure difference, the execution subunit is configured to control the adsorption assembly to adsorb the first filter in a forward direction, to remove dirt; and
the pressure obtaining subunit is further configured to obtain a second pressure difference between the two sides of the first filter after adsorption ends, the determining subunit is further configured to determine whether the second pressure difference is greater than a second preset pressure difference after adsorption ends, and when the second pressure difference is greater than the second preset pressure difference, the execution subunit is further configured to control the washing assembly to wash the first filter in a reverse direction, where the second preset pressure difference is less than or equal to the first preset pressure difference.

In an implementation, when the first pressure difference is less than or equal to the first preset pressure difference, the execution subunit is further configured to control cleaning work not to be performed.

In a possible implementation, that the control unit is configured to control, based on the pressure parameter that is of the two sides of the first filter and that is obtained by the sensing unit, the first-stage cleaning unit and/or the second-stage cleaning unit to work further includes:
the pressure obtaining subunit is further configured to obtain a third pressure difference between the two sides of the first filter after washing ends, the determining subunit is further configured to determine whether the third pressure difference is greater than a third preset pressure difference after washing ends, and when the third pressure difference is greater than the third preset pressure difference, the execution subunit is further configured to control the motor to drive the mandrel assembly to work, to replace at least one part of the first filter with a part of the second filter, where the third preset pressure difference is less than or equal to the second preset pressure difference.

In a possible implementation, when the second pressure difference is less than or equal to the second preset pressure difference, the filter cleaning system finishes cleaning.

In a possible implementation, when the third pressure difference is less than the third preset pressure difference, the filter cleaning system finishes cleaning.

In a possible implementation, the filter cleaning system further includes a frame, the mandrel assembly further includes a second mandrel, the first mandrel and the second mandrel are fastened on two ends of the frame along a first direction, the second mandrel is configured to wind the first filter, and the motor is further configured to drive the second mandrel to rotate; and
that the execution subunit is further configured to control the motor to drive the mandrel assembly to work, to replace at least one part of the first filter with a part of the second filter includes: the execution subunit controls the motor to work, and the motor drives the second mandrel to rotate, to drive the first filter to move along the first direction at least by a preset distance with respect to the first mandrel and the second mandrel, to wind at least one part of the first filter on the second mandrel, and drive the second filter to move along the first direction at least by a preset distance with respect to the first mandrel and the second mandrel, to replace at least one part of the first filter with a part of the second filter.

The distance by which the first filter moves with respect to the first mandrel is equal to the distance by which the first filter moves with respect to the second mandrel. The preset distance may be set based on an actual requirement. Usually, the preset distance is a distance between the first mandrel and the second mandrel, so that the first filter between the first mandrel and the second mandrel is completely replaced, and the replaced first filter is wound on the second mandrel. In some implementations, the preset distance may be greater than the distance between the first mandrel and the second mandrel. In some implementations, the preset distance may be less than the distance between the first mandrel and the second mandrel, so that at least one part of the first filter between the first mandrel and the second mandrel is the clean second filter, and air intake efficiency of the filter can also be improved.

In some implementations, the frame includes a top plate and a bottom plate oppositely disposed along the first direction. The first mandrel is fastened on an end of the frame that is adjacent to the top plate, and the second mandrel is fastened on an end of the frame that is adjacent to the bottom plate. A first connecting bar is disposed on the end of the frame that is adjacent to the top plate. The first connecting bar extends along a second direction. The second direction is perpendicular to the first direction. There is a gap between the first connecting bar and the top plate. The second filter runs through the gap between the first connecting bar and the top plate to connect to the first filter. The first connecting bar may be fixedly connected to the top plate, or may be connected and fixed to side plates in the frame that are oppositely disposed along the second direction. A second connecting bar is disposed on the end of the frame that is adjacent to the bottom plate. The second connecting bar extends along the second direction. There is a gap between the second connecting bar and the bottom plate. The first filter runs through the gap between the second connecting bar and the bottom plate. The second connecting bar may be fixedly connected to the bottom plate, or may be connected and fixed to the side plates in the frame that are oppositely disposed along the second direction.

In some implementations, the first connecting bar and the second connecting bar do not exist. The first mandrel is fastened on the end of the frame that is adjacent to the top plate, and the second mandrel is fastened on the end of the frame that is adjacent to the bottom plate. To be specific, the second filter is directly wound on the first mandrel, and the first filter is directly wound on the second mandrel.

In an implementation, the motor is a stepmotor, and is fastened on the frame. The motor is connected to the second mandrel by using a hinge. The hinge is sleeved on outer surfaces of the motor and the second mandrel. In this case, the second mandrel may be solid or hollow. When the motor rotates, the second mandrel is driven by using the hinge to rotate. The second mandrel pulls a lower end part of the first filter to move downward. An upper end of the first filter drives the first mandrel to rotate. The second filter moves downward. In some implementations, the stepmotor may alternatively be disposed in the first mandrel and/or the second mandrel. In this case, the first mandrel and/or the second mandrel are hollow. When the stepmotor is disposed in the second mandrel, the stepmotor is in rotatable connection to an inner surface of the second mandrel. There are gears on an outer surface of the stepmotor and the inner surface of the second mandrel for adaption. When the stepmotor rotates, the second mandrel is driven to rotate.

In a possible implementation, the adsorption assembly includes a sucker and a vacuum pump in communication with the sucker, the sucker is fastened on the frame and is located on an air inlet side of the first filter, and the motor is further configured to drive the first mandrel to rotate; and
that the execution subunit is configured to control the adsorption assembly to adsorb the first filter in a forward direction includes:
the execution subunit is configured to: control the vacuum pump to work, and control the sucker to adsorb a first position part of the first filter for a first preset time;
the execution subunit is configured to control the motor to work, and the motor drives the second mandrel to rotate, to control the first filter to move toward a direction of the second mandrel, so that a second position part of the first filter overlaps the sucker;
the execution subunit is further configured to control the sucker to adsorb the second position part of the first filter for the first preset time, where the first position part of the first filter is at least partially different from the second position part of the first filter; and
after the sucker finishes adsorbing the first position part and the second position part, the execution subunit is further configured to control the motor to drive the first mandrel to rotate, to control the first filter to move toward a direction of the first mandrel, so that the first position part and the second position part are located between the first mandrel and the second mandrel.

In some implementations, the first position part is adjacent to the second position part. The sucker sequentially adsorbs the first filter step by step.

In some implementations, the first position part may partially overlap the second position part, to sufficiently adsorb the parts of the first filter.

In some implementations, two motors may be disposed to be respectively in rotatable connection to the first mandrel and the second mandrel. When one of the motors drives the first mandrel to rotate, the first filter may be driven to move toward the first mandrel, and when the other motor drives the second mandrel to rotate, the first filter may be driven to move toward the second mandrel. In this way, the first filter can be controlled to reciprocate in the first direction, and the sucker can adsorb the first filter for a plurality of times, to improve cleaning efficiency.

In some implementations, the sucker includes an adsorption opening away from an end of the vacuum pump, and the adsorption opening is attached on a surface of the first filter facing toward the air inlet side. The dirt on the first filter enters the sucker through the adsorption opening. In an implementation, the adsorption assembly further includes a sucking tube, where the sucking tube is connected between the sucker and the vacuum pump. In one aspect, the sucking tube may be configured to: communicate with the sucker and the vacuum pump, and provide a transmission channel for the dirt. In a further aspect, the sucking tube has a particular length, so that mounting positions of the sucker and the vacuum pump are more flexible.

In an implementation, the adsorption assembly further includes a dirt storage box. The dirt storage box is connected to an end of the vacuum pump that is away from the sucker, and is configured to collect dirt, to avoid recontamination.

In a possible implementation, the frame further includes a first side bar and a second side bar that are oppositely disposed on the two sides of the first filter along a second direction, the second direction intersects with the first direction, two ends of the sucker along the second direction are respectively fastened on the first side bar and the second side bar, and a length of the sucker along the second direction is greater than or equal to a length of the first filter along the second direction.

In some implementations, the sucker is hung on the top plate by using a hinge. The hinge is in rotatable connection to the sucker. The motor is in rotatable connection to an end of the hinge that is away from the sucker. During work, the motor may drive the hinge to rotate, to further drive the sucker to move up and down in the first direction, thereby adsorbing the dirt on the first filter.

In some implementations, the motor may drive the sucker to move in a left-right, up-down, or inclined direction of the first filter. In this case, a width of the sucker may be set to be less than a width of the first filter, so that the sucker can walk at any position of the first filter, and a moving manner in which the sucker adsorbs the dirt on the first filter is more flexible, thereby helping improve efficiency of cleaning the first filter.

In a possible implementation, the first-stage cleaning unit further includes the brush assembly, and the brush assembly is disposed on a side of the sucker that is close to the first mandrel. The brush assembly and the adsorption assembly are used at the same time, to improve a cleaning effect.

In a possible implementation, the washing assembly includes a high-pressure nozzle and a high-pressure pump in communication with the high-pressure nozzle, the high-pressure nozzle is located on a leeward side of the first filter, the motor is further configured to drive the first mandrel to rotate, and the execution subunit is electrically connected to the high-pressure pump and controls the high-pressure pump to work; and
that the execution subunit is further configured to control the washing assembly to wash the first filter in a reverse direction includes:
the execution subunit is further configured to: control the high-pressure pump to work, and control the high-pressure nozzle to wash a third position part of the first filter for a second preset time;
the execution subunit is further configured to control the motor to work, and the motor drives the second mandrel to rotate, to control the first filter to move toward a direction of the second mandrel, so that the high-pressure nozzle is aligned with a fourth position part of the first filter;
the execution subunit is further configured to control the high-pressure nozzle to wash the fourth position part of the first filter for the second preset time, where the third position part of the first filter is at least partially different from the fourth position part of the first filter; and
after the high-pressure nozzle finishes washing the third position part and the fourth position part, the execution subunit is further configured to control the motor to drive the first mandrel to rotate, to control the first filter to move toward a direction of the first mandrel, so that the third position part and the fourth position part are located between the first mandrel and the second mandrel.

In a possible implementation, the execution subunit is further configured to control the high-pressure pump to work, so that the high-pressure nozzle sprays washing liquid to the leeward side of the first filter at a preset liquid outlet speed.

In some implementations, the washing assembly further includes a washing liquid tank. The high-pressure pump is connected between the washing liquid tank and the high-pressure nozzle, and the washing liquid tank is configured to provide washing liquid. The washing liquid includes water or mixed liquid of water and detergent.

In an implementation, the high-pressure nozzle is fastened on the frame by using a nozzle bracket.

In some implementations, the high-pressure nozzle is hung on the top plate by using a hinge. The hinge is in rotatable connection to the high-pressure nozzle. The motor is disposed on the top plate. The motor is in rotatable connection to an end of the hinge that is away from the high-pressure nozzle. During work, the motor may drive the hinge to rotate, to further drive the high-pressure nozzle to move up and down in the first direction, thereby adsorbing the dirt on the first filter.

In some implementations, the motor may control the high-pressure nozzle to move in a left-right, up-down, or inclined direction of the first filter. In this case, the high-pressure nozzle can walk at any position of the first filter, and a moving manner in which the high-pressure nozzle washes the dirt on the first filter is more flexible, thereby helping improve efficiency of cleaning the first filter.

In a possible implementation, the sensing unit includes a first probe and a second probe that are respectively located on an air inlet side and the leeward side of the first filter, and the first probe and the second probe are fastened on the frame.

According to a second aspect, this application provides a data center, where the data center includes an IT room, a fan, and the filter cleaning system described above, the fan and the filter cleaning system are located in the IT room, and the first filter is disposed on an air inlet side of the fan.

According to a third aspect, this application provides a filter cleaning method, applied to a filter cleaning system, where the filter cleaning system includes a first filter, a first-stage cleaning unit, and a sensing unit, the filter cleaning system further includes a second-stage cleaning unit, the first-stage cleaning unit includes at least an adsorption assembly, a washing assembly, and a brush assembly, the second-stage cleaning unit includes a motor and a mandrel assembly, the mandrel assembly includes a first mandrel and a second filter wound on the first mandrel, the motor is configured to drive the mandrel assembly to work, to replace at least one part of the first filter with a part of the second filter, and the sensing unit is configured to obtain a pressure parameter of two sides of the first filter; and
the filter cleaning method includes:
obtaining the pressure parameter of the two sides of the first filter; and
controlling, based on the pressure parameter, the first-stage cleaning unit and/or the second-stage cleaning unit to work.

In a possible implementation, the first-stage cleaning unit includes the adsorption assembly and the washing assembly, and the obtaining the pressure parameter of the two sides of the first filter includes:
obtaining a first pressure difference between the two sides of the first filter;
the controlling, based on the pressure parameter, the first-stage cleaning unit and/or the second-stage cleaning unit to work includes:
   determining whether the first pressure difference is greater than a first preset pressure difference; and
   when the first pressure difference is greater than the first preset pressure difference, controlling the adsorption assembly to adsorb the first filter in a forward direction, to remove dirt;
   the obtaining the pressure parameter of the two sides of the first filter further includes:
obtaining a second pressure difference between the two sides of the first filter after adsorption ends; and
the controlling, based on the pressure parameter, the first-stage cleaning unit and/or the second-stage cleaning unit to work further includes:
   determining whether the second pressure difference is greater than a second preset pressure difference, where the second preset pressure difference is less than or equal to the first preset pressure difference; and
   when the second pressure difference is greater than the second preset pressure difference, controlling the washing assembly to wash the first filter in a reverse direction.

In a possible implementation, the obtaining the pressure parameter of the two sides of the first filter includes:
obtaining a third pressure difference between the two sides of the first filter; and
the controlling, based on the pressure parameter, the first-stage cleaning unit and/or the second-stage cleaning unit to work includes:
   determining whether the third pressure difference is greater than a third preset pressure difference, where the third preset pressure difference is less than or equal to the second preset pressure difference; and
   when the third pressure difference is greater than the third preset pressure difference, controlling the motor to drive the mandrel assembly to work, to replace at least one part of the first filter with a part of the second filter.

In a possible implementation, when the second pressure difference is less than or equal to the second preset pressure difference, cleaning ends.

In a possible implementation, when the third pressure difference is less than or equal to the third preset pressure difference, cleaning ends.

In a possible implementation, the controlling the motor to drive the mandrel assembly to work, to replace at least one part of the first filter with a part of the second filter includes: controlling the motor to work, where the motor drives the second mandrel to rotate, to drive the first filter to move along the first direction at least by a preset distance with respect to the first mandrel and the second mandrel, to wind at least one part of the first filter on the second mandrel, and drive the second filter to move along the first direction at least by a preset distance with respect to the first mandrel and the second mandrel, to replace at least one part of the first filter with a part of the second filter.

In a possible implementation, the controlling the adsorption assembly to adsorb the first filter in a forward direction includes:
controlling the vacuum pump to work, and controlling the sucker to adsorb a first position part of the first filter for a first preset time;
controlling the motor to work, where the motor drives the second mandrel to rotate, to control the first filter to move toward a direction of the second mandrel, so that a second position part of the first filter overlaps the sucker;
controlling the sucker to adsorb the second position part of the first filter for the first preset time, where the first position part of the first filter is at least partially different from the second position part of the first filter; and
after the sucker finishes adsorbing the first position part and the second position part of the first filter, controlling the motor to drive the first mandrel to rotate, to control the first filter to move toward a direction of the first mandrel, so that the first position part and the second position part are located between the first mandrel and the second mandrel. In this step, the adsorbed first filter is moved to a position between the first mandrel and the second mandrel again. When it is detected that the second pressure difference between the two sides of the adsorbed first filter is less than or equal to the second preset pressure difference at this moment, the first filter continues to be used to filter dirt clogging the first filter.

In a possible implementation, the controlling the washing assembly to wash the first filter in a reverse direction includes:
controlling the high-pressure pump to work, and controlling the high-pressure nozzle to wash a third position part of the first filter for a second preset time;
controlling the motor to work, where the motor drives the second mandrel to rotate, to control the first filter to move toward a direction of the second mandrel, so that the high-pressure nozzle is aligned with a fourth position part of the first filter;
controlling the high-pressure nozzle to wash the fourth position part of the first filter for the second preset time, where the third position part of the first filter is at least partially different from the fourth position part of the first filter; and
after the high-pressure nozzle finishes washing the third position part and the fourth position part, controlling the motor to drive the first mandrel to rotate, to control the first filter to move toward a direction of the first mandrel, so that the third position part and the fourth position part are located between the first mandrel and the second mandrel.

### BRIEF DESCRIPTION OF DRAWINGS

To describe technical solutions in embodiments of this application more clearly, the following describes the accompanying drawings required for the embodiments in this application.
FIG. 1 is a schematic diagram of a structure of a filter cleaning system according to an implementation of this application;
FIG. 2 is a front view of a filter cleaning system according to an implementation of this application;
FIG. 3 is a side view of a filter cleaning system according to an implementation of this application;
FIG. 4 is a block diagram of a structure of a control unit in a filter cleaning system according to an implementation of this application;
FIG. 5 is a side view of a filter cleaning system according to an implementation of this application;
FIG. 6 is a side view of a filter cleaning system according to an implementation of this application;
FIG. 7 is a side view of a filter cleaning system according to an implementation of this application;
FIG. 8 is a position diagram showing that a sucker in a filter cleaning system is located in a first position part of a filter according to an implementation of this application;
FIG. 9 is a side view of a filter cleaning system according to an implementation of this application;
FIG. 10 is a position diagram showing that a sucker in a filter cleaning system is located in a second position part of a filter according to an implementation of this application;
FIG. 11 is a position diagram showing that a sucker in a filter cleaning system is located in a first position part of a filter according to an implementation of this application;
FIG. 12 is a position diagram showing that a sucker in a filter cleaning system is located in a second position part of a filter according to an implementation of this application;
FIG. 13 is a side view of a filter cleaning system according to an implementation of this application;
FIG. 14 is a position diagram showing that a high-pressure nozzle in a filter cleaning system is located in a third position part of a filter according to an implementation of this application;
FIG. 15 is a side view of a filter cleaning system according to an implementation of this application;
FIG. 16 is a position diagram showing that a high-pressure nozzle in a filter cleaning system is located in a fourth position part of a filter according to an implementation of this application;
FIG. 17 is a schematic diagram of a structure of a data center according to an implementation of this application;
FIG. 18 is a schematic diagram of a structure of an electronic device according to an implementation of this application;
FIG. 19 is a flowchart of a filter cleaning method according to an implementation of this application;
FIG. 20 is a flowchart of a filter cleaning method according to an implementation of this application;
FIG. 21A and FIG. 21B are a flowchart of a filter cleaning method according to an implementation of this application;
FIG. 22 is a sub flowchart of step S220 in a filter cleaning method according to an implementation of this application; and
FIG. 23 is a sub flowchart of step S240 in a filter cleaning method according to an implementation of this application.

### DESCRIPTION OF EMBODIMENTS

The following describes embodiments of this application with reference to the accompanying drawings in the embodiments of this application.

The terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In description of this application, unless otherwise specified, "a plurality of" means two or more than two.

In addition, in this specification, orientation terms such as "up" and "down" are defined relative to orientations of structures schematically placed in the accompanying drawings. It should be understood that, these directional terms are relative concepts. They are intended to provide relative description and clarification and may vary correspondingly based on changes of the orientations in which the structures are placed.

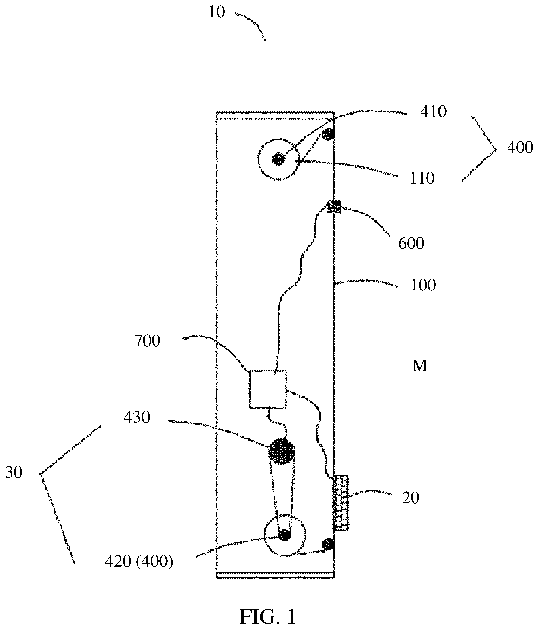

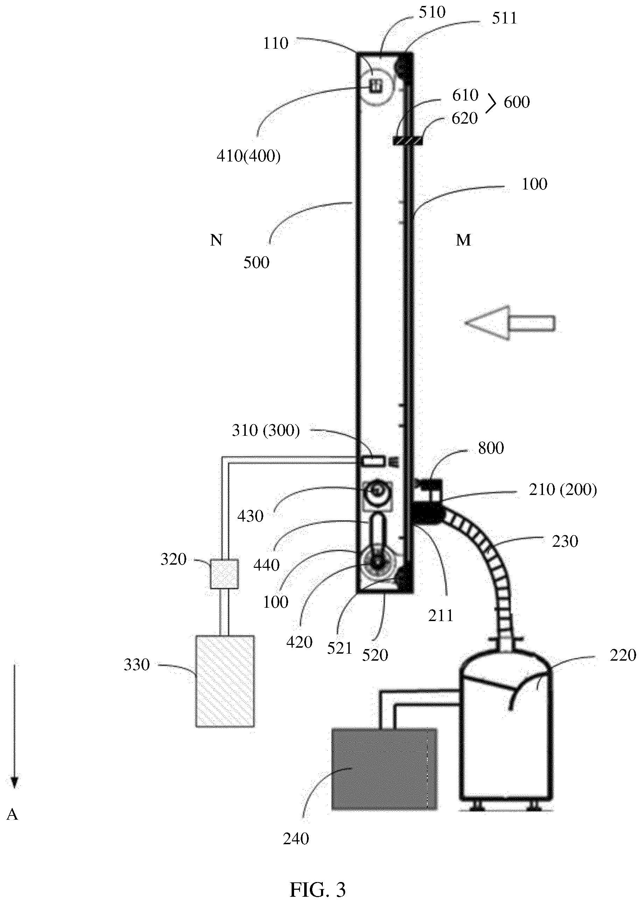

Refer to FIG. 1, FIG. 2, and FIG. 3. An implementation of this application provides a filter cleaning system 10, including a first filter 100, a first-stage cleaning unit 20, a second-stage cleaning unit 30, a sensing unit 600, and a control unit 700. The first-stage cleaning unit 20 includes at least an adsorption assembly 200, a washing assembly 300, and a brush assembly 800 (as shown in FIG. 3). The second-stage cleaning unit 30 includes a motor 430 and a mandrel assembly 400 (as shown in FIG. 1). The mandrel assembly 400 includes a first mandrel 410 and a second filter 110 wound on the first mandrel 410. The motor 430 is configured to drive the mandrel assembly 400 to work, to replace at least one part of the first filter 100 with a part of the second filter 110. The sensing unit 600 is configured to obtain a pressure parameter of two sides of the first filter 100. The control unit 700 is configured to control, based on the pressure parameter, the first-stage cleaning unit 20 and/or the second-stage cleaning unit 30 to work.

The first-stage cleaning unit 20 is configured to clean the first filter 100. The first filter 100 in this application is a filter that is configured to filter air in the filter cleaning system 10. There is dirt on the first filter 100, and the dirt is an object to be cleaned by the filter cleaning system 10. The second-stage cleaning unit 30 is configured to replace the first filter 100 on which there is dirt. The second filter 110 is a clean filter on which there is no dirt. That the control unit 700 controls, based on the pressure parameter, the first-stage cleaning unit 20 and/or the second-stage cleaning unit 30 to work includes: the control unit 700 controls, based on the pressure parameter, the first-stage cleaning unit 20 to clean the first filter 100, or the control unit 700 controls, based on the pressure parameter, the second-stage cleaning unit 30 to replace the first filter 100, or after controlling, based on the pressure parameter, the first-stage cleaning unit 20 to clean the first filter 100, the control unit 700 controls, based on the pressure parameter, the second-stage cleaning unit 30 to replace the first filter 100, to enable the filter configured to filter air to remain clean.

The two sides of the first filter 100 include an air inlet side M and a leeward side N of the first filter 100. Air pressure of the air inlet side M is greater than air pressure of the leeward side N. The air pressure of the air inlet side M and the air pressure of the leeward side N may be obtained, and then a difference between the two is obtained as the pressure parameter. The pressure parameter of the two sides of the first filter 100 may reflect a clogging status of the first filter 100. A larger pressure parameter indicates a more severe clogging status of the first filter 100.

The first-stage cleaning unit 20 includes at least the adsorption assembly 200, the washing assembly 300, and the brush assembly 800. The adsorption assembly 200 is configured to adsorb the dirt on the first filter 100. The dirt includes hair, catkins, dust, and the like. The washing assembly 300 is configured to wash the first filter 100 to remove the dirt on the first filter 100. The brush assembly 800 is configured to brush the dirt on the first filter 100. When the first-stage cleaning unit 20 includes the adsorption assembly 200, the washing assembly 300, and the brush assembly 800, the control unit 700 may control, based on a size of the pressure parameter, performance parameters of the cleaning assemblies during cleaning, to achieve a relatively good cleaning effect.

For example, when the first-stage cleaning unit 20 is the adsorption assembly 200, the control unit 700 may control at least one of adsorption parameters of the adsorption assembly 200, such as an adsorption force, an adsorption area, and an adsorption time based on the size of the pressure parameter, so that the adsorption assembly 200 can effectively clean the first filter 100. For example, when the pressure parameter is relatively large, it indicates that there is a relatively large amount of dirt clogging the first filter 100. In this case, the adsorption force and the adsorption time may be set to be relatively large. When the pressure parameter is relatively small, it indicates that there is a relatively small amount of dirt clogging the first filter 100. In this case, the adsorption force and the adsorption time may be set to be relatively small, to further reduce cleaning energy consumption and costs when the first filter 100 is cleaned, so that cleaning selection is more flexible.

In another example, when the first-stage cleaning unit 20 is the washing assembly 300, the control unit 700 may control at least one of washing parameters of the washing assembly 300, such as a liquid outlet speed of washing liquid, a washing time, and a quantity of times of washing based on the size of the pressure parameter, so that the washing assembly 300 can efficiently clean the first filter 100. In some cases, the washing parameters may alternatively be controlled based on the pressure parameter, to save the washing liquid.

In another example, when the first-stage cleaning unit 20 includes at least two of the adsorption assembly 200, the washing assembly 300, and the brush assembly 800, the control unit 700 may control, based on the size of the pressure parameter, a cleaning sequence of the at least two of the adsorption assembly 200, the washing assembly 300, and the brush assembly 800, to better achieve an effect of cleaning the first filter 100. In another example, the control unit 700 may control, based on the pressure parameter, the adsorption assembly 200 and the brush assembly 800 to clean the first filter 100 at the same time, and the adsorption assembly 200 and the brush assembly 800 cooperate with each other to achieve a better cleaning effect.

The filter cleaning system 10 in this application controls, based on the pressure parameter of the two sides of the first filter 100, the first-stage cleaning unit 20 and/or the second-stage cleaning unit 30 to work, so that in one aspect, a filter cleaning effect can be improved, and in a further aspect, a filter cleaning manner is more flexible to reduce costs. The filter cleaning system 10 in this application may be applied to a data center. The data center includes a plurality of electronic products configured to process data or process signals, for example, a server. These electronic products heat up during work and need to be cooled by a fan. The filter cleaning system 10 is located on an air inlet side of the fan to filter air. The filter cleaning system 10 may also be applied to an electronic device such as an air conditioner, a heat exchanger, a blower, or an air exchanger. When the filter cleaning system 10 is applied to the data center, air intake efficiency can be ensured, and the most energy-saving and efficient catkin-proof and anti-clogging effects can be finally achieved. This can avoid a failure of the data center to maintain an effective air inlet volume after the filter cleaning system 10 is clogged due to late manual maintenance. This can also avoid frequent replacement and maintenance of the filter in the season of catkin outbreak, thereby saving manpower and material resources. When the filter cleaning system 10 is applied to the electronic device such as the air conditioner, continuous and efficient operation of the electronic device such as the air conditioner can be ensured.

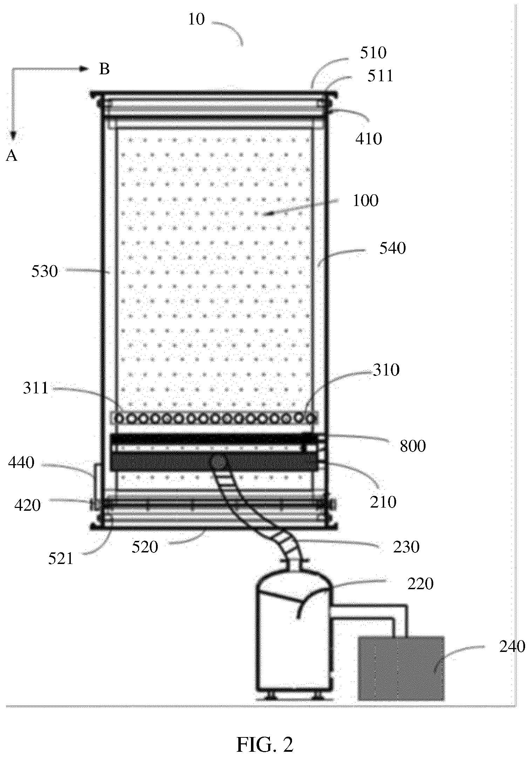

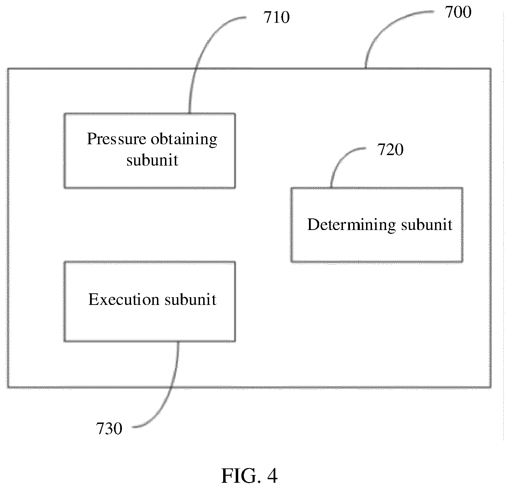

Refer to FIG. 2, FIG. 3, and FIG. 4. The control unit 700 includes a pressure obtaining subunit 710, a determining subunit 720, and an execution subunit 730 (as shown in FIG. 4). The determining subunit 720 is in signal connection to the pressure obtaining subunit 710 and the execution subunit 730. The pressure obtaining subunit 710 is in signal connection to the sensing unit 600. The sensing unit 600 is a pressure sensor. The first-stage cleaning unit 20 includes the adsorption assembly 200 and the washing assembly 300. The execution subunit 730 is electrically connected to the adsorption assembly 200 and the washing assembly 300. That the control unit 700 is configured to control, based on the pressure parameter, the first-stage cleaning unit 20 and/or the second-stage cleaning unit 30 to work includes:
the pressure obtaining subunit 710 is configured to obtain a first pressure difference between the two sides of the first filter 100, the determining subunit 720 is configured to determine whether the first pressure difference is greater than a first preset pressure difference, and when the first pressure difference is greater than the first preset pressure difference, the execution subunit 730 is configured to control the adsorption assembly 200 to adsorb the first filter 100 in a forward direction, to remove dirt. The pressure obtaining subunit 710, the determining subunit 720, and the execution subunit 730 may be integrated together, that is, located at a same position, or may be distributed at different positions. For example, the pressure obtaining subunit 710 may be disposed adjacent to the sensing unit 600, and the determining subunit 720 and the execution subunit 730 may be disposed at other positions, so that flexibility of disposing components can be improved. The signal connection between the determining subunit 720 and the pressure obtaining subunit 710 and the execution subunit 730 includes a wired connection and a wireless connection.

In this application, the pressure obtaining subunit 710 is configured to obtain a pressure difference between the two sides of the first filter 100, and may obtain the pressure difference between the two sides of the first filter 100 by using the sensing unit 600 at different moments based on a requirement.

The first preset pressure difference may be set based on different first filters 100 and different application scenarios. For example, in some implementations, the first preset pressure difference is 350 Pa. When the first pressure difference is 360 Pa, it indicates that the first pressure difference is greater than the first preset pressure difference. When the first pressure difference is 250 Pa, it indicates that the first pressure difference is less than the first preset pressure difference. In an implementation, the first preset pressure difference is a pressure value greater than 350 Pa. When the filter cleaning system 10 is applied to the data center or the air conditioner, the first preset pressure difference may be set based on a size or a power of a fan in the data center or the air conditioner. For example, when the fan is relatively small or the power of the fan is relatively small, a value of the first preset pressure difference may be set to be relatively small. For example, the first preset pressure difference is any value from 300 Pa to 340 Pa. When the fan is relatively large or the power of the fan is relatively large, the value of the first preset pressure difference may be set to be relatively large. For example, the first preset pressure difference is any value from 400 Pa to 500 Pa. In some implementations, the first preset pressure difference may be set based on a size of the filter cleaning system 10 or a size of meshes of the first filter 100. When the filter cleaning solution is applied to a large filter cleaning system 10 or when the meshes of the first filter 100 are relatively small, the first preset pressure difference may be set to a relatively large value. When the filter cleaning solution is applied to a small filter cleaning system 10 or when the meshes of the first filter 100 are relatively large, the first preset pressure difference may be set to a relatively small value.

When the first pressure difference is less than or equal to the first preset pressure difference, the execution subunit 730 is further configured to control cleaning work not to be performed. A time interval for monitoring the first pressure difference between the two sides of the first filter 100 may be preset. For example, detection is performed once every three days. When the first pressure difference is less than the first preset pressure difference, it indicates that the first filter 100 can continue to be used, and continuous operation of the air conditioner or the fan is not affected. In this case, cleaning work does not need to be performed.

Adsorbing the first filter 100 in the forward direction means adsorbing a surface of the air inlet side M of the first filter 100. When the filter cleaning system 10 in this application may be applied to an environment in which there is a large amount of catkins and dust in the north, the dirt on the first filter 100 includes catkins, hair, dust, or winged insects. The adsorption assembly 200 mainly adsorbs and removes light dirt, such as catkins, hair, or dust. Because the dirt on the first filter 100 is mainly located on the surface of the air inlet side M of the first filter 100, the surface of the air inlet side M of the first filter 100 is adsorbed in this application. For example, when the adsorption assembly 200 includes a sucker, the sucker is disposed on the surface of the air inlet side M of the first filter 100 to adsorb the surface of the air inlet side M. An adsorption time for which the adsorption assembly 200 adsorbs the first filter 100 may be preset based on an actual situation.

The pressure obtaining subunit 710 is further configured to obtain a second pressure difference between the two sides of the first filter 100 after adsorption ends. The determining subunit 720 is further configured to determine whether the second pressure difference is greater than a second preset pressure difference after adsorption ends. When the second pressure difference is greater than the second preset pressure difference, the execution subunit 730 is further configured to control the washing assembly 300 to wash the first filter 100 in a reverse direction.

Adsorption parameters such as the adsorption time and an adsorption force of the adsorption assembly 200 for the first filter 100 may be preset based on an actual situation. That the adsorption ends means that the adsorption assembly 200 finishes adsorption based on the preset adsorption time.

The second preset pressure difference is less than or equal to the first preset pressure difference. Because the adsorption assembly 200 already adsorbs the first filter 100 in the forward direction and cleans the first filter 100 for the first time, the second pressure difference between the two sides of the first filter 100 in this case is less than the first pressure difference, or at most, equal to the first pressure difference. Therefore, in this application, the second preset pressure difference is less than or equal to the first preset pressure difference. For example, the first preset pressure difference is greater than 350 Pa, and the second preset pressure difference is less than 150 Pa.

When the second pressure difference is greater than the second preset pressure difference, it indicates that an effect of adsorption and cleaning of the adsorption assembly 200 is poor, or does not achieve an ideal cleaning degree. The washing assembly 300 needs to be used to wash the first filter 100 in the reverse direction, to perform cleaning for the second time. For example, when the second preset pressure difference is 150 Pa, and the second pressure difference is 250 Pa, it indicates that the effect of adsorption and cleaning of the adsorption assembly 200 is poor, and most of the dirt remains on the first filter 100 after the adsorption ends. In this case, the washing assembly 300 needs to be controlled to wash the first filter 100. In this application, that the washing assembly 300 washes the first filter 100 in the reverse direction means that the washing assembly 300 washes a surface of the leeward side N of the first filter 100. For example, a high-pressure nozzle of the washing assembly 300 is disposed on the leeward side N of the first filter 100. Because the dirt is blown by air toward the first filter 100 and adheres to the first filter 100, most of the dirt is on the surface of the air inlet side M of the first filter 100. Some of the dirt, for example, winged insects and gravels, enters the meshes of the first filter 100. The dirt located on the surface of the air inlet side M of the first filter 100 is easily adsorbed and removed by the adsorption assembly 200, but the dirt in the meshes of the first filter 100 is not easily adsorbed and removed. In this step, the high-pressure nozzle washes the first filter 100 in the reverse direction, to remove the dirt.

The filter cleaning system 10 in this implementation may be applied to the environment in which there is a large amount of catkins and dust in the north. The dirt that can be relatively easily removed, such as catkins, hair, and dust, can be removed by using the adsorption assembly 200 through adsorption in the forward direction, and then winged insects and gravels in the first filter 100 are removed by using the washing assembly 300 through washing in the reverse direction, to keep the first filter 100 clean, thereby enabling the filter cleaning system 10 to be normally used. If the first filter 100 is first washed by using the washing assembly 300, water makes catkins and hair adhere to the first filter 100 more tightly, and the catkins or hair cannot be adsorbed off when adsorbed by using the adsorption assembly 200. In addition, dust becomes mud when encountering water, and the mud adheres to the first filter 100, making it more difficult to adsorb the mud. The filter cleaning system 10 in this implementation obtains the pressure differences between the two sides of the first filter 100 by using the pressure obtaining subunit 710, and cleans the first filter 100 in a cleaning sequence of first using the adsorption assembly 200 and then using the washing assembly 300 based on different pressure differences, so that dirt clogging the first filter 100 such as catkins, hair, dust, winged insects, or gravels can be effectively removed, to make the first filter 100 keep a clean state at any moment, to ensure air intake efficiency, thereby finally achieving the most energy-saving and efficient catkin-proof and anti-clogging effects.

In a possible implementation, that the control unit 700 is configured to control, based on the pressure parameter that is of the two sides of the first filter 100 and that is obtained by the sensing unit 600, the first-stage cleaning unit 20 and/or the second-stage cleaning unit 30 to work further includes:
the pressure obtaining subunit 710 is further configured to obtain a third pressure difference between the two sides of the first filter 100 after washing ends, the determining subunit 720 is further configured to determine whether the third pressure difference is greater than a third preset pressure difference range after washing ends, and when the third pressure difference is greater than the third preset pressure difference, the execution subunit 730 is further configured to control the motor 430 to drive the mandrel assembly 400 to work, to replace at least one part of the first filter 100 with a part of the second filter 110, where the third preset pressure difference is less than or equal to the second preset pressure difference.

Washing parameters such as a washing time for which the washing assembly 300 washes the first filter 100, and a liquid outlet speed may be preset based on an actual situation. That the washing ends means that the washing assembly 300 finishes washing based on the preset washing time.

The third preset pressure difference is less than or equal to the second preset pressure difference. Because the washing assembly 300 already performs high-pressure washing on the first filter 100 and cleans the first filter 100 again, the third pressure difference between the two sides of the first filter 100 in this case is less than the second pressure difference, or at most, equal to the second pressure difference. Therefore, in this application, the third preset pressure difference is less than or equal to the second preset pressure difference. For example, the second preset pressure difference and the third preset pressure difference are both less than 150 Pa. In some implementations, the second preset pressure difference is 150 Pa to 200 Pa, and the third preset pressure difference is less than 150 Pa.

After the adsorption assembly 200 performs adsorption and the washing assembly 300 performs washing, when it is determined, by obtaining the pressure parameter of the two sides of the first filter 100, that the first filter 100 still cannot reach the ideal cleaning effect, the execution subunit 730 controls to replace the first filter 100 with the second filter 110, to remove the first filter 100 clogged by dirt, and replace the first filter 100 with the new second filter 110, thereby enabling the filter cleaning system 10 to be normally used. If the cleaning effect of the first filter 100 is not determined by obtaining the pressure parameter of the two sides of the first filter 100 after the adsorption assembly 200 and the washing assembly 300 perform cleaning, and instead, the first filter 100 is directly used, a risk that the cleaning effect of the first filter 100 is poor and affects use may exist. If the clogging status of the first filter 100 is not determined by obtaining the pressure parameter of the two sides of the first filter 100 after the first filter 100 is clogged, and the first filter 100 is directly replaced, materials may be wasted due to frequent replacement of the first filter 100, because in some cases, the first filter 100 can achieve a relatively good cleaning effect through cleaning by using the adsorption assembly 200 and/or the washing assembly 300 without replacement. If the ideal effect cannot be achieved after the adsorption assembly 200 and the washing assembly 300 perform cleaning, the filter cleaning system 10 in this implementation then controls to replace the first filter 100 with the second filter 110. This is to select a filter cleaning manner based on the cleaning effect of the first filter 100, to ensure the cleaning effect and reduce costs.

In a possible implementation, when the second pressure difference is less than or equal to the second preset pressure difference, the filter cleaning system 10 finishes cleaning. The cleaning effect of the first filter 100 is determined by comparing the second pressure difference between the two sides of the first filter 100. When the second pressure difference is less than or equal to the second preset pressure difference, it indicates that the adsorption assembly 200 has a relatively good adsorption effect for the first filter 100, and a cleaning operation is not performed anymore. In this case, the filter cleaning system 10 can be normally used, and the washing assembly 300 does not need to be controlled to wash the first filter 100 or the second-stage cleaning unit 30 does not need to be controlled to replace the first filter 100, so that cleaning costs can be reduced, and a cleaning time of the first filter 100 can be further shortened, to ensure normal use of the data center or the electronic device as soon as possible. In an implementation, the execution subunit 730 is further electrically connected to the fan in the data center or the electronic device. When the second pressure difference is less than the second preset pressure difference, the execution subunit 730 controls the fan to continue to work. When the filter cleaning system 10 performs cleaning, the fan stops working. When the second pressure difference is less than the second preset pressure difference, it indicates that the filter cleaning system 10 finishes cleaning. In this case, the execution subunit 730 is further configured to control the fan to continue to work. In some implementations, when the filter cleaning system 10 performs cleaning, the fan may not stop working. When the second pressure difference is less than the second preset pressure difference, the filter cleaning system 10 finishes cleaning, and the control unit 700 suspends working. When the filter cleaning system 10 is applied to a data center IT room having an air conditioner, continuous and uninterrupted refrigeration of the air conditioner of the data center IT room can be truly implemented, to prevent a server of the IT room from being overheated to damage unit devices.

In a possible implementation, when the third pressure difference is less than the third preset pressure difference, the filter cleaning system 10 finishes cleaning. The cleaning effect of the first filter 100 is determined by comparing the second pressure difference between the two sides of the first filter 100. When the third pressure difference is less than the third preset pressure difference, it indicates that the washing assembly 300 has a relatively good washing effect for the first filter 100, and a subsequent cleaning operation is not performed anymore. In this case, the filter cleaning system 10 can be normally used, and the second-stage cleaning unit 30 does not need to be controlled to replace the first filter 100, so that cleaning costs can be reduced, and a cleaning time of the first filter 100 can be further shortened, to ensure normal use of the data center or the electronic device as soon as possible. In an implementation, the execution subunit 730 is further electrically connected to the fan in the data center or the electronic device. When the third pressure difference is less than the third preset pressure difference, the execution subunit 730 controls the fan to continue to work. When the filter cleaning system 10 performs cleaning, the fan stops working. When the third pressure difference is less than the third preset pressure difference, it indicates that the filter cleaning system 10 finishes cleaning. In this case, the execution subunit 730 is further configured to control the fan to continue to work. In some implementations, when the filter cleaning system 10 performs cleaning, the fan may not stop working. When the third pressure difference is less than the third preset pressure difference, the filter cleaning system 10 finishes cleaning, and the control unit 700 suspends working.

In a possible implementation, the filter cleaning system 10further includes a frame 500 (as shown in FIG. 3). The mandrel assembly 400 further includes a second mandrel 420. The first mandrel 410 and the second mandrel 420 are fastened on two ends of the frame 500 along a first direction A. The second mandrel 420 is configured to wind the first filter 100. The motor 430 is configured to drive the second mandrel 420 to rotate. In this implementation, the first direction A is a direction perpendicular to ground. The first mandrel 410 is located above the second mandrel 420. In some implementations, the first direction A may alternatively be a horizontal direction parallel to the ground. To adapt to different devices, the filter cleaning system 10 may alternatively be mounted in the data center or the electronic device in another direction. In other words, the first direction A may be any direction.

That the execution subunit 730 is further configured to control the motor 430 to drive the mandrel assembly 400 to work, to replace at least one part of the first filter 100 with a part of the second filter 110 includes: the execution subunit 730 controls the motor 430 to work, and the motor 430 drives the second mandrel 420 to rotate, to drive the first filter 100 to move along the first direction A at least by a preset distance with respect to the first mandrel 410 and the second mandrel 420, to wind at least one part of the first filter 100 on the second mandrel 420, and drive the second filter 110 to move along the first direction A at least by a preset distance with respect to the first mandrel 410 and the second mandrel 420, to replace at least one part of the first filter 100 with a part of the second filter 110.

The distance by which the first filter 100 moves with respect to the first mandrel 410 is equal to the distance by which the first filter 100 moves with respect to the second mandrel 420. The preset distance may be set based on an actual requirement. Usually, the preset distance is a distance between the first mandrel 410 and the second mandrel 420, so that the first filter 100 between the first mandrel 410 and the second mandrel 420 is completely replaced, and the replaced first filter 100 is wound on the second mandrel 420. In some implementations, the preset distance may be greater than the distance between the first mandrel 410 and the second mandrel 420. In some implementations, the preset distance may be less than the distance between the first mandrel 410 and the second mandrel 420, so that at least one part of the first filter 100 between the first mandrel 410 and the second mandrel 420 is the clean second filter 110, and air intake efficiency of the filter can also be improved.

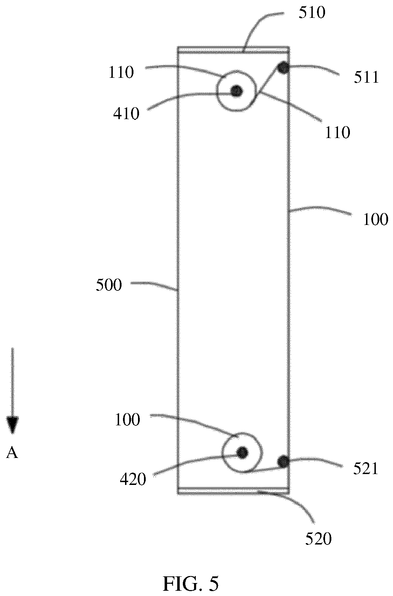

Refer to FIG. 3. In this implementation, the frame 500 includes a top plate 510 and a bottom plate 520 oppositely disposed along the first direction A. The first mandrel 410 is fastened on an end of the frame 500 that is adjacent to the top plate 510, and the second mandrel 420 is fastened on an end of the frame 500 that is adjacent to the bottom plate 520. A first connecting bar 511 is disposed on the end of the frame 500 that is adjacent to the top plate 510. The first connecting bar 511 extends along a second direction B. The second direction B is perpendicular to the first direction A (as shown in FIG. 2). There is a gap between the first connecting bar 511 and the top plate 510 (as shown in FIG. 5). The second filter 110 runs through the gap between the first connecting bar 511 and the top plate 510 to connect to the first filter 100. The first connecting bar 511 may be fixedly connected to the top plate 510, or may be connected and fixed to side plates in the frame 500 that are oppositely disposed along the second direction B. A second connecting bar 521 is disposed on the end of the frame 500 that is adjacent to the bottom plate 520. The second connecting bar 521 extends along the second direction B. There is a gap between the second connecting bar 521 and the bottom plate 520. The first filter 100 runs through the gap between the second connecting bar 521 and the bottom plate 520. The second connecting bar 521 may be fixedly connected to the bottom plate 520, or may be connected and fixed to the side plates in the frame 500 that are oppositely disposed along the second direction B.

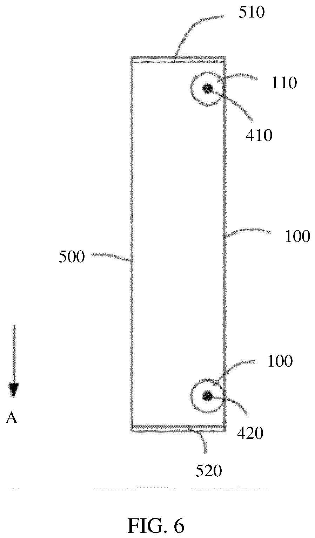

Refer to FIG. 6. In some implementations, the first connecting bar 511 and the second connecting bar 521 do not exist. The first mandrel 410 is fastened on the end of the frame 500 that is adjacent to the top plate 510, and the second mandrel 420 is fastened on the end of the frame 500 that is adjacent to the bottom plate 520. To be specific, the second filter 110 is directly wound on the first mandrel 410, and the first filter 100 is directly wound on the second mandrel 420.

Refer to FIG. 3 again. In an implementation, the motor 430 is a stepmotor, and is fastened on the frame 500. The motor 430 is connected to the second mandrel 420 by using a hinge 440. The hinge 440 is sleeved on outer surfaces of the motor 430 and the second mandrel 420. In this case, the second mandrel 420 may be solid or hollow. When the motor 430 rotates, the second mandrel 420 is driven by using the hinge 440 to rotate. The second mandrel 420 pulls a lower end part of the first filter 100 to move downward. An upper end of the first filter 100 drives the first mandrel 410 to rotate. The second filter 110 moves downward. In some implementations, the stepmotor may alternatively be disposed in the first mandrel 410 and/or the second mandrel 420. In this case, the first mandrel 410 and/or the second mandrel 420 are hollow. When the stepmotor is disposed in the second mandrel 420, the stepmotor is in rotatable connection to an inner surface of the second mandrel 420. There are gears on an outer surface of the stepmotor and the inner surface of the second mandrel 420 for adaption. When the stepmotor rotates, the second mandrel 420 is driven to rotate.

In a possible implementation, the adsorption assembly 200 includes a sucker 210 and a vacuum pump 220 in communication with the sucker 210 (as shown in FIG. 3). The sucker 210 is fastened on the frame 500 and is located on the air inlet side M of the first filter 100. The motor 430 is further configured to drive the first mandrel 410 to rotate.

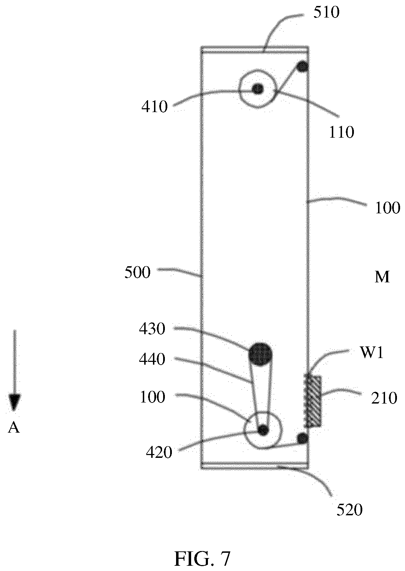

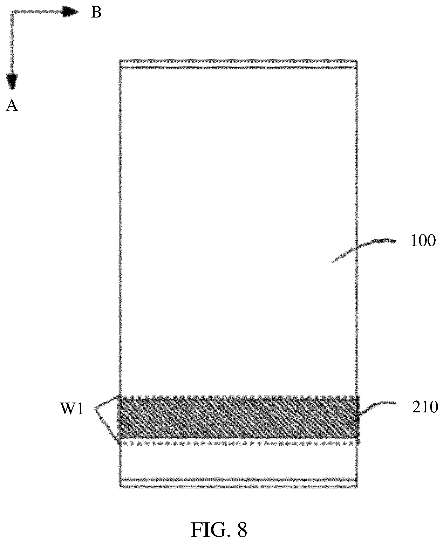

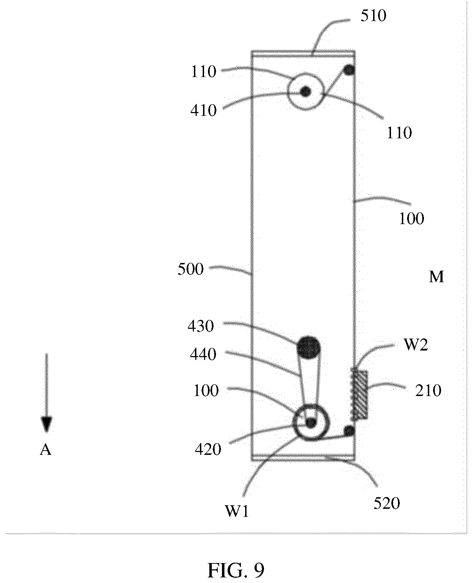

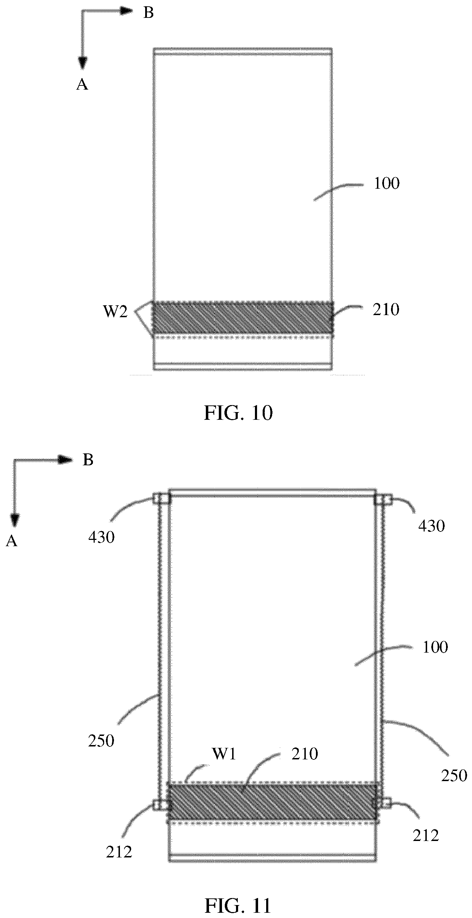

Refer to FIG. 7 to FIG. 10. That the execution subunit 730 is configured to control the adsorption assembly 200 to adsorb the first filter 100 in a forward direction includes:
the execution subunit 730 is configured to: control the vacuum pump 220 to work, and control the sucker 210 to adsorb a first position part W1 of the first filter 100 for a first preset time (as shown in FIG. 7 and FIG. 8);
the execution subunit 730 is configured to control the motor 430 to work, and the motor 430 drives the second mandrel 420 to rotate, to control the first filter 100 to move toward a direction of the second mandrel 420, so that a second position part W2 of the first filter 100 overlaps the sucker 210 (as shown in FIG. 9 and FIG. 10);
the execution subunit 730 is further configured to control the sucker 210 to adsorb the second position part W2 of the first filter 100 for the first preset time, where the first position part W1 of the first filter 100 is at least partially different from the second position part W2 of the first filter 100; and
after the sucker 210 finishes adsorbing the first position part W1 and the second position part W2 of the first filter 100, the execution subunit 730 is configured to control the motor 430 to drive the first mandrel 410 to rotate, to control the first filter 100 to move toward a direction of the first mandrel 410, so that the first position part W1 and the second position part W2 are located between the first mandrel 410 and the second mandrel 420.

The first preset time for adsorption in the forward direction may be set based on the first pressure difference. When the first pressure difference is relatively large, the first preset time may be set to a relatively large value. When the first pressure difference is relatively small, the first preset time may be set to a relatively small value, to further reduce adsorption energy consumption when the cleaning effect is ensured. In this implementation, the first position part W1 is adjacent to the second position part W2. The sucker 210 sequentially adsorbs the first filter 100 step by step. In some implementations, the first position part W1 may partially overlap the second position part W2, to sufficiently adsorb the parts of the first filter 100. In some implementations, two motors 430 may be disposed to be respectively in rotatable connection to the first mandrel 410 and the second mandrel 420. When one of the motors 430 drives the first mandrel 410 to rotate, the first filter 100 may be driven to move toward the first mandrel 410, and when the other motor 430 drives the second mandrel 420 to rotate, the first filter 100 may be driven to move toward the second mandrel 420. In this way, the first filter 100 can be controlled to reciprocate in the first direction A, and the sucker 210 can adsorb the first filter 100 for a plurality of times. For example, the first filter 100 is first controlled to move toward the second mandrel 420 along the first direction A. After the first filter 100 moves by a preset distance, the first filter 100 is controlled to move toward the first mandrel 410, and reciprocate for a plurality of times, to improve cleaning efficiency.

It should be noted that, that the two parts: the first position part W1 and the second position part W2 of the first filter 100 are adsorbed is shown in this implementation. In actual application, a plurality of different parts of the first filter 100 may be adsorbed. In other words, the first filter 100 may be divided into a plurality of parts. After the sucker 210 finishes adsorbing each part of the first filter 100, all the parts of the first filter 100 that are adsorbed are moved to positions between the first mandrel 410 and the second mandrel 420 again. Because an opening area of the sucker 210 is usually less than an area of the first filter 100, the first filter 100 needs to be divided into at least two parts (that is, the first position part W1 and the second position part W2). As such, the first filter 100 needs to be adsorbed by the sucker 210 at least twice, to ensure that the sucker 210 completely adsorbs the first filter 100.

In this implementation, the sucker 210 includes an adsorption opening 211 away from an end of the vacuum pump 220 (as shown in FIG. 3), and the adsorption opening 211 is attached on a surface of the first filter 100 facing toward the air inlet side M. The dirt on the first filter 100 enters the sucker 210 through the adsorption opening 211. In an implementation, the adsorption assembly 200 further includes a sucking tube 230, where the sucking tube 230 is connected between the sucker 210 and the vacuum pump 220. In one aspect, the sucking tube 230 may be configured to: communicate with the sucker 210 and the vacuum pump 220, and provide a transmission channel for the dirt. In a further aspect, the sucking tube 230 has a particular length, so that mounting positions of the sucker 210 and the vacuum pump 220 are more flexible.

In an implementation, the adsorption assembly 200 further includes a dirt storage box 240. The dirt storage box 240 is connected to an end of the vacuum pump 220 that is away from the sucker 210, and is configured to collect dirt, to avoid recontamination.

Refer to FIG. 2 again. In a possible implementation, the frame 500 further includes a first side bar 530 and a second side bar 540 that are oppositely disposed on the two sides of the first filter 100 along a second direction B, the second direction B intersects with the first direction A, two ends of the sucker 210 along the second direction B are respectively fastened on the first side bar 530 and the second side bar 540, and a length of the sucker 210 along the second direction B is greater than or equal to a length of the first filter 100 along the second direction B. In this implementation, the second direction B is perpendicular to the first direction A. The two ends of the sucker 210 along the second direction B may be fastened on the first side bar 530 and the second side bar 540 by using screws, fasteners, binders, or connectors. In an implementation, a length of the first side bar 530 and a length of the second side bar 540 along the first direction A may be the same as a length of the frame 500 along the first direction A. Alternatively, in some implementations, the length of the first side bar 530 and the length of the second side bar 540 along the first direction A are less than the length of the frame 500 along the first direction A.

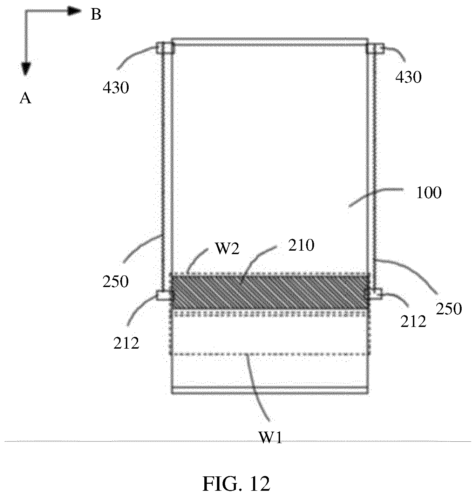

Refer to FIG. 11. In some implementations, the sucker 210 is hung on the top plate 510 by using a hinge 250. The hinge 250 is in rotatable connection to the sucker 210. Specifically, there are connecting portions 212 on two ends of the sucker 210. There are two hinges 250. The two hinges 250 are respectively in rotatable connection to the connecting portions 212 on the two ends of the sucker 210 along the second direction B. The motor 430 is disposed on the top plate 510. The motor 430 is in rotatable connection to an end of the hinge 250 that is away from the sucker 210. During work, the motor 430 may drive the hinge 250 to rotate, to further drive the sucker 210 to move up and down in the first direction A, thereby adsorbing the dirt on the first filter 100. As shown in FIG. 11, the sucker 210 adsorbs the first position part W1 of the first filter 100, and then the motor 430 works to drive the hinge 250 to rotate. The connecting portion 212 drives the sucker 210 to move in the first direction A toward the top plate 510, until the sucker 210 overlaps the second position part W2 (as shown in FIG. 12). In this case, the sucker 210 adsorbs the second position part W2 of the first filter 100. In some implementations, the connecting portion 212 may be disposed at an intermediate position of the sucker 210, and the hinge 250 is in rotatable connection to the connecting portion 212 in the middle of the sucker 210.

In some implementations, the motor 430 may drive the sucker 210 to move in a left-right, up-down, or inclined direction of the first filter 100. In this case, a width of the sucker 210 may be set to be less than a width of the first filter 100, so that the sucker 210 can walk at any position of the first filter 100, and a moving manner in which the sucker 210 adsorbs the dirt on the first filter 100 is more flexible, thereby helping improve efficiency of cleaning the first filter 100.

In a possible implementation, the first-stage cleaning unit 20 further includes the brush assembly 800 (as shown in FIG. 2 and FIG. 3), and the brush assembly 800 is disposed on a side of the sucker 210 that is close to the first mandrel 410. In this implementation, the brush assembly 800 and the adsorption assembly 200 are used at the same time, to improve a cleaning effect. In a process in which the first filter 100 moves up and down, the brush assembly 800 brushes the first filter 100, to loosen dirt such as catkins and hair, thereby facilitating adsorption. In this implementation, a length of the brush assembly 800 along the second direction B is equal to a length of the sucker 210 along the second direction B, so that a part that is brushed by the brush assembly 800 and that is of the first filter 100 is adsorbed clean by the sucker 210. In an implementation, a length of the brush assembly 800 and a length of the sucker 210 along the second direction B are equal to a length of the first filter 100 along the second direction B, so that the brush assembly 800 and the sucker 210 clean the dirt of the first filter 100 along the second direction B at a time. In some implementations, two ends of the brush assembly 800 along the second direction B are respectively fastened on the two ends of the sucker 210 along the second direction B. In this implementation, the sucker 210 and the brush assembly 800 are disposed on an end close to the second mandrel 420, and are located at a bottom of the filter cleaning system 10, to prevent the fan from hindering air intake during work. In some implementations, when the sucker 210 is connected to the top plate 100 by using the hinge, the brush assembly 800 may move up and down on a surface of the first filter 100 with the sucker 210. In some implementations, the brush assembly 800 may include a plurality of brush components.

In a possible implementation, the washing assembly 300 includes a high-pressure nozzle 310 and a high-pressure pump 320 in communication with the high-pressure nozzle 310 (as shown in FIG. 3), and the high-pressure nozzle 310 is located on the leeward side N of the first filter 100. There may be a plurality of high-pressure nozzles 310, to improve washing efficiency, and a specific quantity of the high-pressure nozzles 310 may be set based on a requirement, for example, set to 4, 8, or 10. In some implementations, there is a preset width of the high-pressure nozzle 310 in the second direction B, and there are a plurality of liquid outlets in the high-pressure nozzle 310. In an implementation, a width of the high-pressure nozzle 310 in the second direction B is equal to a width of the first filter 100 in the second direction B.

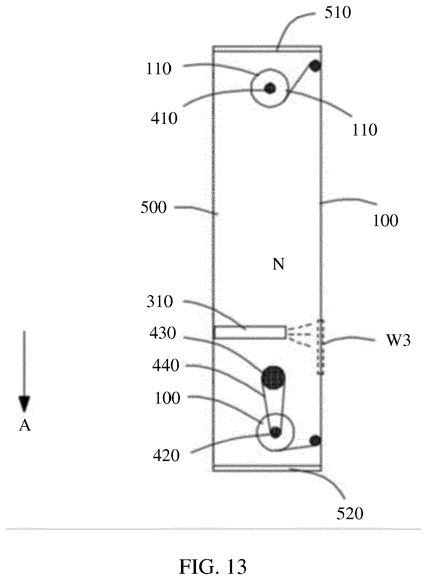

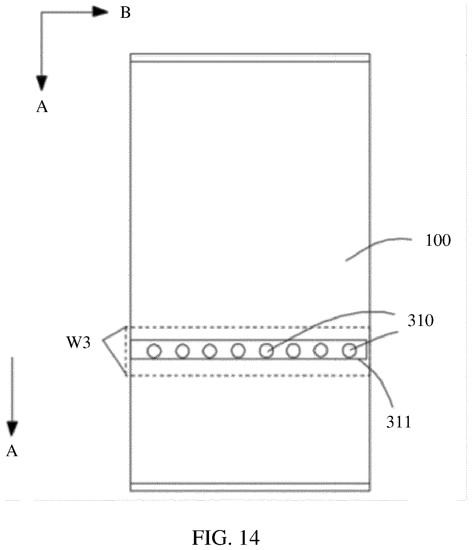

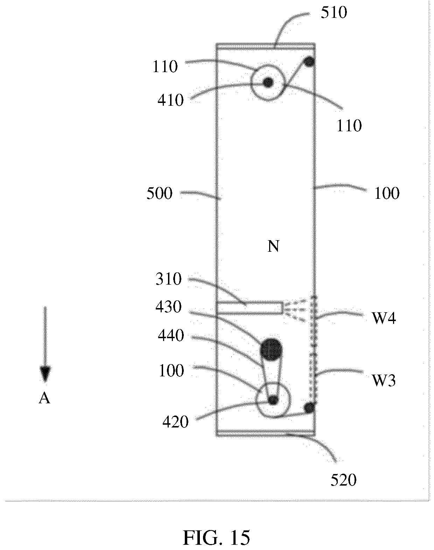

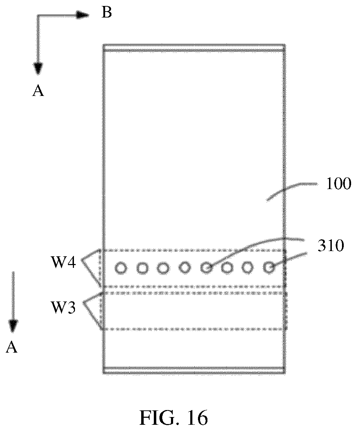

Refer to FIG. 13 to FIG. 16. That the execution subunit 730 is further configured to control the washing assembly 300 to wash the first filter 100 in a reverse direction includes:
the execution subunit 730 is further configured to: control the high-pressure pump 320 to work, and control the high-pressure nozzle 310 to wash a third position part W3 of the first filter 100 for a second preset time (as shown in FIG. 13 and FIG. 14);
the execution subunit 730 is further configured to control the motor 430 to work, and the motor 430 drives the second mandrel 420 to rotate, to control the first filter 100 to move toward a direction of the second mandrel 420, so that the high-pressure nozzle 310 is aligned with a fourth position part W4 of the first filter 100 (as shown in FIG. 15 and FIG. 16);
the execution subunit 730 is further configured to control the high-pressure nozzle 310 to wash the fourth position part W4 of the first filter 100 for the second preset time, where the third position part W3 of the first filter 100 is at least partially different from the fourth position part W4 of the first filter 100; and
after the high-pressure nozzle 310 finishes washing the third position part W3 and the fourth position part W4, the execution subunit 730 is further configured to control the motor 430 to drive the first mandrel 410 to rotate, to control the first filter 100 to move toward a direction of the first mandrel 410, so that the third position part W3 and the fourth position part W4 are located between the first mandrel 410 and the second mandrel 420.

The second preset time for washing in the reverse direction may be set based on the second pressure difference. When the second pressure difference is relatively large, the second preset time may be set to a relatively large value. When the second pressure difference is relatively small, the second preset time may be set to a relatively small value, to further reduce cleaning energy consumption when the cleaning effect is ensured. In this implementation, the third position part W3 is adjacent to the fourth position part W4. The high-pressure nozzle 310 sequentially washes the first filter 100 step by step. In some implementations, the third position part W3 may partially overlap the fourth position part W4, to sufficiently wash the first filter 100. In some implementations, the first filter 100 may be controlled to reciprocate in the first direction A, and the high-pressure nozzle 310 can wash the first filter 100 for a plurality of times. For example, the first filter 100 is first controlled to move toward the second mandrel 420 along the first direction A. After the first filter 100 moves by a preset distance, the first filter 100 is controlled to move toward the first mandrel 410 along the first direction A, and reciprocate for a plurality of times, to improve cleaning efficiency.

In this implementation, the motor 430 drives the second mandrel 420 to rotate, to control the first filter 100 to move toward a direction of the second mandrel 420, where the third position part W3 is located between the fourth position part W4 and the second mandrel 420. In some implementations, the motor 430 is in rotatable connection to the first mandrel 410, to drive the first mandrel 410 to rotate, to control the first filter 100 to move toward a direction of the first mandrel 410. In this case, the third position part W3 is located between the fourth position part W4 and the first mandrel 410.

That the high-pressure nozzle 310 is aligned with the fourth position part W4 of the first filter 100 means that the high-pressure nozzle 310 can wash the fourth position part W4. For example, when the high-pressure nozzle 310 sprays washing liquid in a horizontal direction to wash the first filter 100, the high-pressure nozzle 310 may be vertically aligned with the first filter 100. When the high-pressure nozzle 310 sprays washing liquid at a preset angle to wash the first filter 100, there may be an included angle between the high-pressure nozzle 310 and the first filter 100, and the included angle is adjustable based on an actual requirement.

It should be noted that, that the two parts: the third position part W3 and the fourth position part W4 of the first filter 100 are washed is shown in this implementation. In actual application, a plurality of different parts of the first filter 100 may be washed. In other words, the first filter 100 may be divided into a plurality of parts. After the high-pressure nozzle 310 finishes washing each part of the first filter 100, all the parts of the first filter 100 that are washed are moved to positions between the first mandrel 410 and the second mandrel 420 again. Washing is performed at least twice, to enable the first filter 100 to be washed completely .

In a possible implementation, the execution subunit 730 is electrically connected to the high-pressure pump 320. The execution subunit 730 is further configured to control the high-pressure pump 320 to work, so that the high-pressure nozzle 310 sprays washing liquid to the leeward side of the first filter 100 at a preset liquid outlet speed. The preset liquid outlet speed may be set based on an actual situation, for example, based on the second pressure difference. When the second pressure difference is relatively large, the preset liquid outlet speed may be set to a relatively large value. When the second pressure difference is relatively small, the preset liquid outlet speed may be set to a relatively small value, so that the preset liquid outlet speed can be flexibly set, to save washing liquid when the cleaning effect is ensured. The preset liquid outlet speed may be controlled and adjusted by using the high-pressure pump 320.

In some implementations, the washing assembly 300 further includes a washing liquid tank 330. The high-pressure pump 320 is connected between the washing liquid tank 330 and the high-pressure nozzle 310, and the washing liquid tank 330 is configured to provide washing liquid. The washing liquid includes water or mixed liquid of water and detergent.

In an implementation, the high-pressure nozzle 310 is fastened on the frame 500 by using a nozzle bracket 311 (as shown in FIG. 14).

In some implementations, the high-pressure nozzle 310 is hung on the top plate 510 by using a hinge. The hinge is in rotatable connection to the high-pressure nozzle 310. The motor 430 is disposed on the top plate 510. The motor 430 is in rotatable connection to an end of the hinge that is away from the high-pressure nozzle 310. During work, the motor 430 may drive the hinge to rotate, to further drive the high-pressure nozzle 310 to move up and down in the first direction A, thereby adsorbing the dirt on the first filter 100.

In some implementations, the motor 430 may control the high-pressure nozzle 310 to move in a left-right, up-down, or inclined direction of the first filter 100. In this case, the high-pressure nozzle 310 can walk at any position of the first filter 100, and a moving manner in which the high-pressure nozzle 310 washes the dirt on the first filter 100 is more flexible, thereby helping improve efficiency of cleaning the first filter 100.

In a possible implementation, the sensing unit 600 includes a first probe 610 and a second probe 620 that are respectively located on the air inlet side M and the leeward side N of the first filter 100 (as shown in FIG. 3), and the first probe 610 and the second probe 620 are fastened on the frame 500. The first probe 610 is configured to detect air pressure of the air inlet side M of the first filter 100. The second probe 620 is configured to detect air pressure of the leeward side N of the first filter 100. In some implementations, the first probe 610 and the second probe 620 may alternatively be fastened on the first side bar 530, the second side bar 540, the top plate 510, or the bottom plate 520 by using connectors.

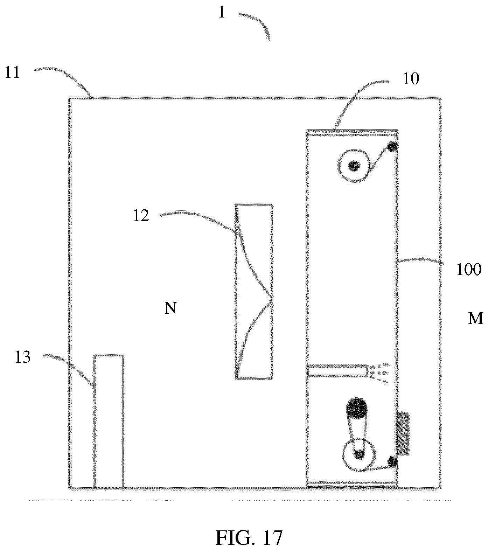

Refer to FIG. 17. An implementation of this application provides a data center 1. The data center 1 includes an IT room 11, a fan 12, and the filter cleaning system 10 in any one of the foregoing implementations. The fan 12 and the filter cleaning system 10 are located in the IT room 11, and a first filter 100 is disposed on an air inlet side M of the fan 12. The data center 1 further includes a plurality of electronic products 13 for processing data, for example, servers. During work, the electronic products heat up. The fan 12 is configured to: ventilate the IT room 11 and cool the electronic products 13. The first filter 100 is configured to filter air. When the data center 1 works, the fan 12 rotates, and air on the air inlet side M of the first filter 100 enters the fan 12 through the first filter 100. Dirt is deposited on the first filter 100 after long time of work. The dirt includes catkins, hair, dust, gravels, winged insects, or the like. When an excessive amount of dirt is accumulated, the foregoing filter cleaning system 10 in this application controls, based on a pressure parameter of two sides of the first filter 100, a first-stage cleaning unit 20 and/or a second-stage cleaning unit 30 to work, so that in one aspect, a filter cleaning effect can be improved, and in a further aspect, a filter cleaning manner is more flexible to reduce costs. For the data center 1, air intake efficiency can be ensured, and the most energy-saving and efficient catkin-proof and anti-clogging effects can be finally achieved, to ensure normal operation of the data center 1. This can avoid a failure of the data center 1 to maintain an effective air inlet volume after the filter cleaning system 10 is clogged due to late manual maintenance. This can also avoid frequent replacement and maintenance of the filter in the season of catkin outbreak, thereby saving manpower and material resources.

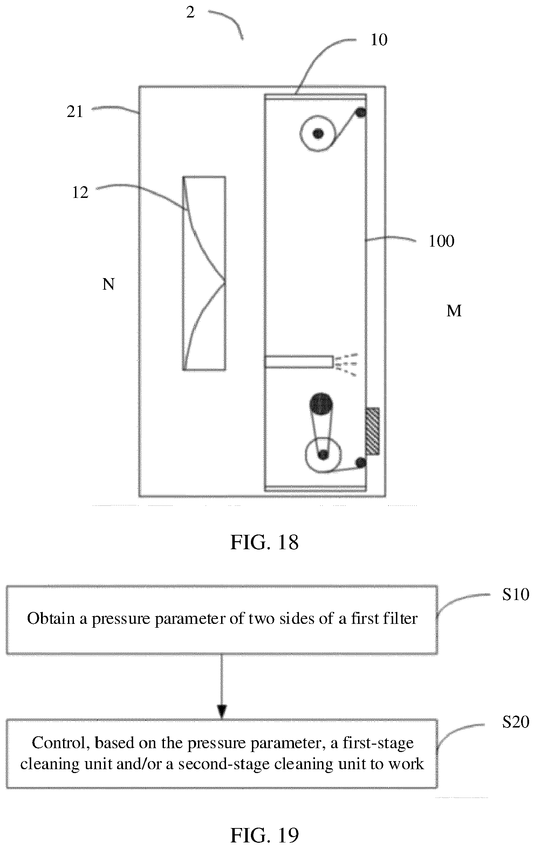

Refer to FIG. 18. An implementation of this application provides an electronic device 2. The electronic device 2 includes the filter cleaning system 10 in any one of the foregoing implementations. The electronic device 2 includes one of an air conditioner, a heat exchanger, a blower, or an air exchanger. Using an example in which the electronic device 2 is the air conditioner, the electronic device 2 includes a housing 21, a fan 12, and the filter cleaning system 10 in any one of the foregoing implementations. The fan 12 and the filter cleaning system 10 are located in the housing 21, and a first filter 100 is disposed on an air inlet side M of the fan 12. When the air conditioner 2 works, the fan 12 rotates, and air on the air inlet side M of the first filter 100 enters the fan 12 through the first filter 100. Dirt is deposited on the first filter 100 after long time of work. When an excessive amount of dirt is accumulated, the first filter 100 is cleaned by using the foregoing filter cleaning system 10 in this application, to ensure continuous and efficient operation of the air conditioner 2.

Refer to FIG. 19 and FIG. 2 and FIG. 3. An implementation of this application provides a filter cleaning method, applied to a filter cleaning system 10. The filter cleaning system 10 includes a first filter 100, a first-stage cleaning unit 20, a second-stage cleaning unit 30, and a sensing unit 600. The first-stage cleaning unit 20 includes at least an adsorption assembly 200, a washing assembly 300, and a brush assembly 800 (as shown in FIG. 3). The second-stage cleaning unit 30 includes a motor 430 and a mandrel assembly 400. The mandrel assembly 400 includes a first mandrel 410 and a second filter 110 wound on the first mandrel 410. The motor 430 is configured to drive the mandrel assembly 400 to work, to replace at least one part of the first filter 100 with a part of the second filter 110. The sensing unit 600 is configured to obtain a pressure parameter of two sides of the first filter 100.

The filter cleaning method includes step S10 and step S20 (as shown in FIG. 19). Detailed steps are as follows.

Step S10. Obtain the pressure parameter of the two sides of the first filter 100. The two sides of the first filter 100 are an air inlet side M and a leeward side N of the first filter 100. Air pressure of the air inlet side M is greater than air pressure of the leeward side N. The air pressure of the air inlet side M and the air pressure of the leeward side N may be obtained, and then a difference between the two is obtained as the pressure parameter.

Step S20. Control, based on the pressure parameter, the first-stage cleaning unit 20 and/or the second-stage cleaning unit 30 to work.

The first-stage cleaning unit 20 is configured to clean the first filter 100. The first filter 100 in this application is a filter that is configured to filter air in the filter cleaning system 10. There is dirt on the first filter 100, and the dirt is an object to be cleaned by the filter cleaning system 10. The second-stage cleaning unit 30 is configured to replace the first filter 100 on which there is dirt. The second filter 110 is a clean filter on which there is no dirt. Controlling, based on the pressure parameter, the first-stage cleaning unit 20 and/or the second-stage cleaning unit 30 to work includes: controlling, based on the pressure parameter, the first-stage cleaning unit 20 to clean the first filter 100, or controlling, based on the pressure parameter, the second-stage cleaning unit 30 to replace the first filter 100, or after controlling, based on the pressure parameter, the first-stage cleaning unit 20 to clean the first filter 100, controlling, based on the pressure parameter, the second-stage cleaning unit 30 to replace the first filter 100, to enable the filter configured to filter air to remain clean.

The first-stage cleaning unit 20 includes at least the adsorption assembly 200, the washing assembly 300, and the brush assembly 800. The adsorption assembly 200 is configured to adsorb the dirt on the first filter 100. The dirt includes hair, catkins, dust, and the like. The washing assembly 300 is configured to wash the first filter 100 to remove the dirt on the first filter 100. The brush assembly 800 is configured to brush the dirt on the first filter 100. When the first-stage cleaning unit 20 includes the adsorption assembly 200, the washing assembly 300, and the brush assembly 800, the control unit 700 may control, based on a size of the pressure parameter, performance parameters of the cleaning assemblies during cleaning, to achieve a relatively good cleaning effect.

For example, when the first-stage cleaning unit 20 is the adsorption assembly 200, at least one of adsorption parameters of the adsorption assembly 200, such as an adsorption force, an adsorption area, and an adsorption time may be controlled based on the size of the pressure parameter, so that the adsorption assembly 200 can effectively clean the first filter 100. For example, when the pressure parameter is relatively large, it indicates that there is a relatively large amount of dirt clogging the first filter 100. In this case, the adsorption force and the adsorption time may be set to be relatively large. When the pressure parameter is relatively small, it indicates that there is a relatively small amount of dirt clogging the first filter 100. In this case, the adsorption force and the adsorption time may be set to be relatively small, to further reduce cleaning energy consumption and costs when the first filter 100 is cleaned, so that cleaning selection is more flexible.

In another example, when the first-stage cleaning unit 20 is the washing assembly 300, at least one of washing parameters of the washing assembly 300, such as a liquid outlet speed of washing liquid, a washing time, and a quantity of times of washing may be controlled based on the size of the pressure parameter, so that the washing assembly 300 can efficiently clean the first filter 100. In some cases, the washing parameters may alternatively be controlled based on the pressure parameter, to save the washing liquid.

In another example, when the first-stage cleaning unit 20 includes at least two of the adsorption assembly 200, the washing assembly 300, and the brush assembly 800, a cleaning sequence of the at least two of the adsorption assembly 200, the washing assembly 300, and the brush assembly 800 may be controlled based on the size of the pressure parameter, to better achieve an effect of cleaning the first filter 100. In another example, the adsorption assembly 200 and the brush assembly 800 may be controlled based on the pressure parameter, to clean the first filter 100 at the same time, and the adsorption assembly 200 and the brush assembly 800 cooperate with each other to achieve a better cleaning effect.

Based on the filter cleaning method in this application, the first-stage cleaning unit 20 and/or the second-stage cleaning unit 30 are controlled, based on the pressure parameter of the two sides of the first filter 100, to work, so that in one aspect, a filter cleaning effect can be improved, and in a further aspect, a filter cleaning manner is more flexible to reduce costs. The filter cleaning method in this application may be applied to the data center having the filter cleaning system 10, so that air intake efficiency can be ensured, and the most energy-saving and efficient catkin-proof and anti-clogging effects can be finally achieved. This can avoid a failure of the data center to maintain an effective air inlet volume after the filter cleaning system 10 is clogged due to late manual maintenance. This can also avoid frequent replacement and maintenance of the filter in the season of catkin outbreak, thereby saving manpower and material resources. The filter cleaning method may also be applied to the electronic device such as the air conditioner, and continuous and efficient operation of the electronic device such as the air conditioner can be ensured.

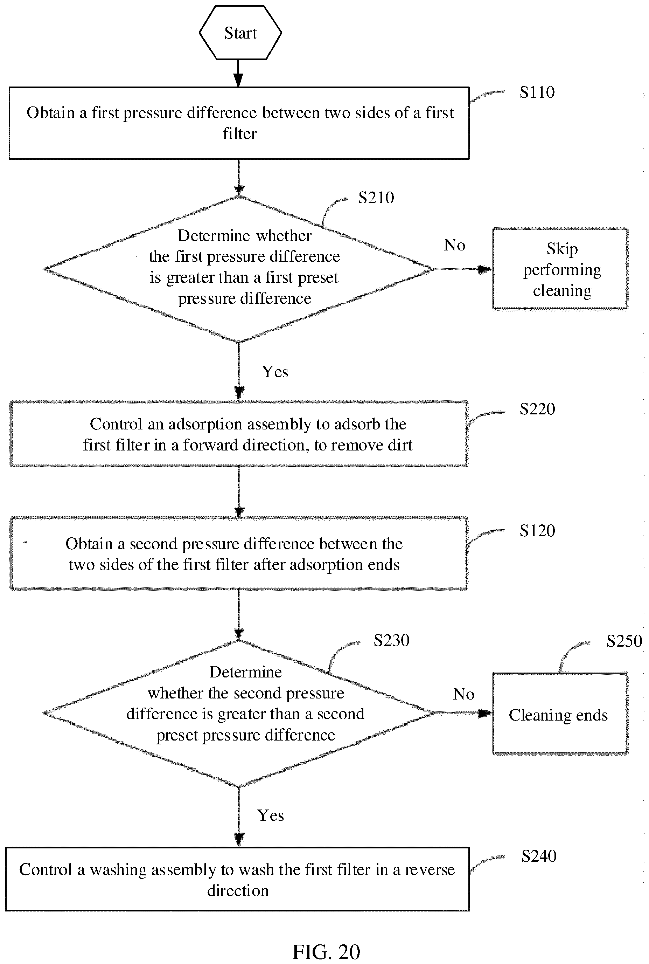

Refer to FIG. 20. In a possible implementation, the first-stage cleaning unit 20 includes the adsorption assembly 200 and the washing assembly 300 (as shown in FIG. 2). Step S10 includes step S110 and step S120, and step S20 includes step S210, step S220, step S230, step S240, and step S250. Detailed steps are as follows.

Step S 110. Obtain a first pressure difference between the two sides of the first filter 100.

Step S210. Determine whether the first pressure difference is greater than a first preset pressure difference. The first preset pressure difference may be set based on different first filters 100 and different application scenarios. For example, the first preset pressure difference may be 350 Pa. When the first pressure difference is 360 Pa, it indicates that the first pressure difference is greater than the first preset pressure difference. When the first pressure difference is 250 Pa, it indicates that the first pressure difference is less than the first preset pressure difference. In an implementation, the first preset pressure difference is a pressure value greater than 350 Pa. When the filter cleaning system 10 is applied to the air conditioner, the first preset pressure difference may be set based on a size or a power of a fan in the air conditioner. For example, when the fan is relatively small or the power of the fan is relatively small, a value of the first preset pressure difference may be set to be relatively small. For example, the first preset pressure difference is any value from 300 Pa to 340 Pa. When the fan is relatively large or the power of the fan is relatively large, the value of the first preset pressure difference may be set to be relatively large. For example, the first preset pressure difference is any value from 400 Pa to 500 Pa. In some implementations, the first preset pressure difference may be set based on a size of the filter cleaning system 10 or a size of meshes of the first filter 100. When the filter cleaning method is applied to a large filter cleaning system 10 or when the meshes of the first filter 100 are relatively small, the first preset pressure difference may be set to a relatively large value. When the filter cleaning method is applied to a small filter cleaning system 10 or when the meshes of the first filter 100 are relatively large, the first preset pressure difference may be set to a relatively small value.

When the first pressure difference is greater than the first preset pressure difference, step S220 is performed. When the first pressure difference is less than or equal to the first preset pressure difference, cleaning work is not performed. A time interval for monitoring the first pressure difference between the two sides of the first filter 100 may be preset. For example, detection is performed once every three days. When the first pressure difference is less than the first preset pressure difference, it indicates that the first filter 100 can continue to be used, and continuous operation of the air conditioner is not affected. In this case, cleaning work does not need to be performed.

Step S220. Control the adsorption assembly 200 to adsorb the first filter 100 in a forward direction, to remove the dirt. Adsorbing the first filter 100 in the forward direction means adsorbing a surface of the air inlet side M of the first filter 100. In this step, light dirt, such as catkins, hair, or dust is mainly adsorbed and removed. Because the dirt on the first filter 100 is mainly located on the surface of the air inlet side M of the first filter 100, the surface of the air inlet side M of the first filter 100 is adsorbed in this application. In this application, the adsorption assembly 200 may be used to adsorb the first filter 100, to remove the dirt. The adsorption assembly 200 includes a sucker 210, and the sucker 210 is disposed on the surface of the air inlet side M of the first filter 100 to adsorb the surface of the air inlet side M. Adsorption parameters such as the adsorption time and an adsorption force of the adsorption assembly 200 for the first filter 100 may be preset based on an actual situation.

Step S120. Obtain a second pressure difference between the two sides of the first filter 100 after adsorption ends. That the adsorption ends means that the adsorption based on the preset adsorption time ends. In this application, that the adsorption ends means that the adsorption assembly 200 finishes adsorption based on the preset adsorption time.

Step S230. Determine whether the second pressure difference is greater than a second preset pressure difference. The second preset pressure difference is less than or equal to the first preset pressure difference. Because the first filter 100 is already adsorbed in the forward direction and is cleaned for the first time in step S220, the second pressure difference between the two sides of the first filter 100 in this case is less than the first pressure difference, or at most, equal to the first pressure difference. Therefore, in this application, the second preset pressure difference is less than or equal to the first preset pressure difference. For example, the first preset pressure difference is greater than 350 Pa, and the second preset pressure difference is less than 150 Pa.

When the second pressure difference is greater than the second preset pressure difference, step S240 is performed. When the second pressure difference is less than or equal to the second preset pressure difference, step S250 is performed, and cleaning ends. It indicates that the step of adsorbing the first filter 100 in the forward direction has a relatively good adsorption effect, and a subsequent cleaning operation is not performed anymore. In this case, the filter cleaning system 10 can be normally used.

Step S240 is to control the washing assembly 300 to wash the first filter 100 in a reverse direction. That is, when a cleaning effect in the step of adsorbing the first filter 100 in the forward direction is poor, or does not achieve an ideal cleaning degree, the first filter 100 needs to be washed for cleaning for the second time. For example, when the second preset pressure difference is less than 150 Pa, and the second pressure difference is 250 Pa, it indicates that the effect of adsorption and cleaning in the forward direction in step S220 is poor, and most of the dirt remains on the first filter 100 after the adsorption ends. In this case, the first filter 100 needs to be washed in the reverse direction. In this application, that the first filter 100 is washed in the reverse direction means that a surface of the leeward side N of the first filter 100 is washed. Specifically, the washing assembly 300 is used to clean the first filter 100 in the reverse direction. For example, a high-pressure nozzle of the washing assembly 300 is disposed on the leeward side N of the first filter 100. Because the dirt is blown by air toward the first filter 100 and adheres to the first filter 100, most of the dirt is on the surface of the air inlet side M of the first filter 100. Some of the dirt, for example, winged insects and gravels, enters the meshes of the first filter 100. The dirt located on the surface of the air inlet side M of the first filter 100 is easily adsorbed and removed by the adsorption assembly 200, but the dirt in the meshes of the first filter 100 is not easily adsorbed and removed. In this step, the high-pressure nozzle washes the first filter 100 in the reverse direction, to remove the dirt.

The filter cleaning method in this implementation may be applied to the environment in which there is a large amount of catkins and dust in the north. The dirt that can be relatively easily removed, such as catkins, hair, and dust, can be removed by using the adsorption assembly 200 through adsorption in the forward direction, and then winged insects and gravels in the first filter 100 are removed by using the washing assembly 300 through washing in the reverse direction, to keep the first filter 100 clean, thereby enabling the first filter 100 to be normally used. If the first filter 100 is first washed by using the washing assembly 300, water makes catkins and hair adhere to the first filter 100 more tightly, and the catkins or hair cannot be adsorbed off when adsorbed by using the adsorption assembly 200. In addition, dust becomes mud when encountering water, and the mud adheres to the first filter 100, making it more difficult to adsorb the mud. Based on the filter cleaning method in this implementation, the pressure differences between the two sides of the first filter 100 are obtained, and the first filter 100 is cleaned in a cleaning sequence of first using the adsorption assembly 200 and then using the washing assembly 300 based on different pressure differences, so that dirt clogging the first filter 100 such as catkins, hair, dust, winged insects, or gravels can be effectively removed, to make the first filter 100 keep a clean state at any moment, to ensure air intake efficiency, thereby finally achieving the most energy-saving and efficient catkin-proof and anti-clogging effects.

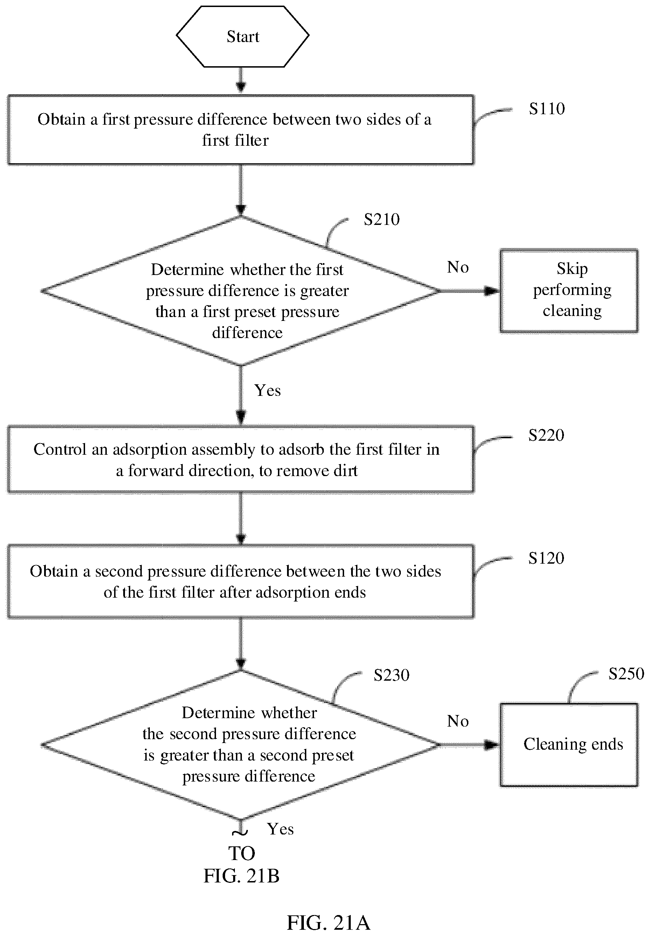

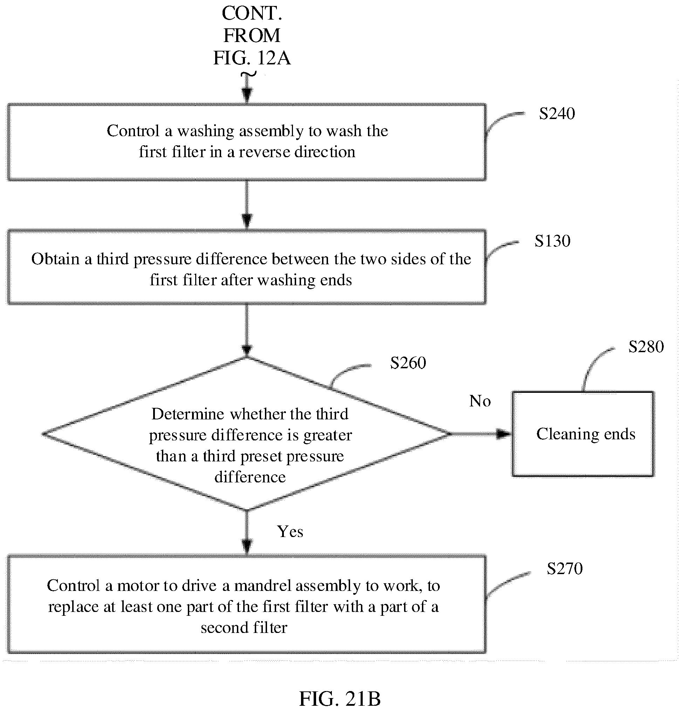

Refer to FIG. 21A and FIG. 21B. In a possible implementation, step S10 further includes step S130, and step S20 further includes step S260, step S270, and step S280. Detailed steps are as follows.

Step S 130. Obtain a third pressure difference between the two sides of the first filter 100 after washing ends. Washing parameters such as a washing time for which the washing assembly 300 washes the first filter 100, and a liquid outlet speed may be preset based on an actual situation. That the washing ends means that the washing based on the preset washing time ends. In this application, that the washing ends means that the washing assembly 300 finishes washing based on the preset washing time.

Step S260. Determine whether the third pressure difference is greater than a third preset pressure difference. The third preset pressure difference is less than or equal to the second preset pressure difference. Because the first filter 100 is already washed in the reverse direction and is cleaned again in step S240, the third pressure difference between the two sides of the first filter 100 in this case is less than the second pressure difference, or at most, equal to the second pressure difference. Therefore, in this application, the third preset pressure difference is less than or equal to the second preset pressure difference. For example, the second preset pressure difference and the third preset pressure difference are both less than 150 Pa. In some implementations, the second preset pressure difference is 150 Pa to 200 Pa, and the third preset pressure difference is less than 150 Pa.

When the third pressure difference is greater than the third preset pressure difference, step S270 is performed. When the third pressure difference is less than or equal to the third preset pressure difference, step S280 is performed, and cleaning ends. It indicates that washing the first filter 100 in the reverse direction has a relatively good cleaning effect, and a subsequent cleaning operation is not performed anymore. In this case, the filter cleaning system 10 can be normally used.

Step S270 is to control the motor 430 to drive the mandrel assembly 400 to work, to replace at least one part of the first filter 100 with a part of the second filter 110.

After the adsorption assembly 200 performs adsorption and the washing assembly 300 performs washing, when it is determined, by obtaining the pressure parameter of the two sides of the first filter 100, that the first filter 100 still cannot reach the ideal cleaning effect, the first filter 100 is replaced with the second filter 110, to remove the first filter 100 clogged by dirt, and replace the first filter 100 with the new second filter 110, thereby enabling the filter to be normally used. If the cleaning effect of the first filter 100 is not determined by obtaining the pressure parameter of the two sides of the first filter 100 after the adsorption assembly 200 and the washing assembly 300 perform cleaning, and instead, the first filter 100 is directly used, a risk that the cleaning effect of the first filter 100 is poor and affects use may exist. If the clogging status of the first filter 100 is not determined by obtaining the pressure parameter of the two sides of the first filter 100 after the first filter 100 is clogged, and the first filter 100 is directly replaced, materials may be wasted due to frequent replacement of the first filter 100, because in some cases, the first filter 100 can achieve a relatively good cleaning effect through cleaning by using the adsorption assembly 200 and/or the washing assembly 300 without replacement. If the ideal effect cannot be achieved after the adsorption assembly 200 and the washing assembly 300 perform cleaning, based on the filter cleaning method in this implementation, the first filter 100 is then controlled to be replaced with the second filter 110. This is to select a filter cleaning manner based on the cleaning effect of the first filter 100, to ensure the cleaning effect and reduce costs.

In a possible implementation, the filter cleaning system 10 includes a frame 500 (as shown in FIG. 3). The mandrel assembly 4 further includes a second mandrel 420. The first mandrel 410 and the second mandrel 420 are fastened on two ends of the frame 500 along a first direction A. The second mandrel 420 is configured to wind the first filter 100 clogged by dirt. In this implementation, the first direction A is a direction perpendicular to ground. The first mandrel 410 is located above the second mandrel 420. In some implementations, the first direction A may alternatively be a horizontal direction parallel to the ground. To adapt to different devices, the first direction A may alternatively be any direction.

The motor 430 is further configured to drive the second mandrel 420 to rotate. Step S270 specifically includes: controlling the motor 430 to work, where the motor 430 drives the second mandrel 420 to rotate, to drive the first filter 100 to move along the first direction A at least by a preset distance with respect to the first mandrel 410 and the second mandrel 420, to wind at least one part of the first filter 100 on the second mandrel 420, and drive the second filter 110 to move along the first direction A at least by a preset distance with respect to the first mandrel 410 and the second mandrel 420, to replace at least one part of the first filter 100 with a part of the second filter 110.

The distance by which the first filter 100 moves with respect to the first mandrel 410 is equal to the distance by which the first filter 100 moves with respect to the second mandrel 420. The preset distance may be set based on an actual requirement. Usually, the preset distance is a distance between the first mandrel 410 and the second mandrel 420, so that the first filter 100 between the first mandrel 410 and the second mandrel 420 is completely replaced, and the replaced first filter 100 is wound on the second mandrel 420. In some implementations, the preset distance may be greater than the distance between the first mandrel 410 and the second mandrel 420. In some implementations, the preset distance may be less than the distance between the first mandrel 410 and the second mandrel 420, so that at least one part of the first filter 100 between the first mandrel 410 and the second mandrel 420 is the second filter 110, and air intake efficiency of the filter can also be improved.

Refer to FIG. 3 again. In this implementation, the frame 500 includes a top plate 510 and a bottom plate 520 oppositely disposed along the first direction A. The first mandrel 410 is fastened on an end of the frame 500 that is adjacent to the top plate 510, and the second mandrel 420 is fastened on an end of the frame 500 that is adjacent to the bottom plate 520. A first connecting bar 511 is disposed on the end of the frame 500 that is adjacent to the top plate 510. The first connecting bar 511 extends along a second direction B. The second direction B is perpendicular to the first direction A (as shown in FIG. 2). There is a gap between the first connecting bar 511 and the top plate 510 (as shown in FIG. 5). The second filter 110 runs through the gap between the first connecting bar 511 and the top plate 510 to connect to the first filter 100. The first connecting bar 511 may be fixedly connected to the top plate 510, or may be connected and fixed to side plates in the frame 500 that are oppositely disposed along the second direction B. A second connecting bar 521 is disposed on the end of the frame 500 that is adjacent to the bottom plate 520. The second connecting bar 521 extends along the second direction B. There is a gap between the second connecting bar 521 and the bottom plate 520. The first filter 100 runs through the gap between the second connecting bar 521 and the bottom plate 520. The second connecting bar 521 may be fixedly connected to the bottom plate 520, or may be connected and fixed to the side plates in the frame 500 that are oppositely disposed along the second direction B.

Refer to FIG. 6 again. In some implementations, the first connecting bar 511 and the second connecting bar 521 do not exist. The first mandrel 410 is fastened on the end of the frame 500 that is adjacent to the top plate 510, and the second mandrel 420 is fastened on the end of the frame 500 that is adjacent to the bottom plate 520. To be specific, the second filter 110 is directly wound on the first mandrel 410, and the first filter 100 is directly wound on the second mandrel 420.

Refer to FIG. 3 again. In an implementation, the motor 430 is a stepmotor, and is fastened on the frame 500. The motor 430 is connected to the second mandrel 420 by using a hinge 440. The hinge 440 is sleeved on outer surfaces of the motor 430 and the second mandrel 420. In this case, the second mandrel 420 may be solid or hollow. When the motor 430 rotates, the second mandrel 420 is driven by using the hinge 440 to rotate. The second mandrel 420 pulls a lower end part of the first filter 100 to move downward. An upper end of the first filter 100 drives the first mandrel 410 to rotate. The second filter 110 moves downward. In some implementations, the stepmotor may alternatively be disposed in the first mandrel 410 and/or the second mandrel 420. In this case, the first mandrel 410 and/or the second mandrel 420 are hollow. When the stepmotor is disposed in the second mandrel 420, the stepmotor is in rotatable connection to an inner surface of the second mandrel 420. There are gears on an outer surface of the stepmotor and the inner surface of the second mandrel 420 for adaption. When the stepmotor rotates, the second mandrel 420 is driven to rotate.

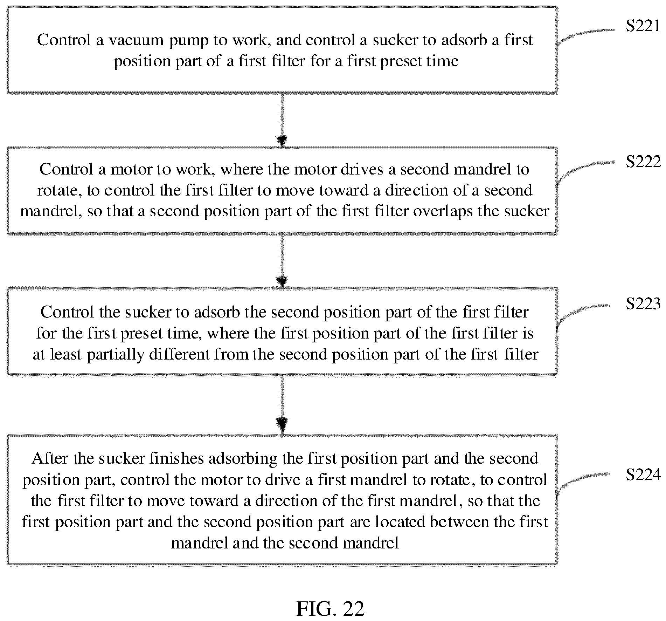

In a possible implementation, the adsorption assembly 200 includes a sucker 210 and a vacuum pump 220 in communication with the sucker 210 (as shown in FIG. 3). The sucker 210 is fastened on the frame 500 and is located on the air inlet side M of the first filter 100. The motor 430 is further configured to drive the first mandrel 410 to rotate. Refer to FIG. 22. Step S220 specifically includes step S221, step S222, step S223, and step 224. Detailed steps are as follows.

Step S221. Control the vacuum pump 220 to work, and control the sucker 210 to adsorb a first position part W1 of the first filter 100 for a first preset time (as shown in FIG. 7 and FIG. 8).

Step S222. Control the motor 430 to work, where the motor 430 drives the second mandrel 420 to rotate, to control the first filter 100 to move toward a direction of the second mandrel 420, so that a second position part W2 of the first filter 100 overlaps the sucker 210 (as shown in FIG. 9 and FIG. 10). The first position part W1 of the first filter 100 is wound on the second mandrel 420.

Step S223. Control the sucker 210 to adsorb the second position part W2 of the first filter 100 for the first preset time, where the first position part W1 of the first filter 100 is at least partially different from the second position part W2 of the first filter 100.

Step S224. After the sucker 210 finishes adsorbing the first position part W1 and the second position part W2 of the first filter 100, control the motor 430 to drive the first mandrel 410 to rotate, to control the first filter 100 to move toward a direction of the first mandrel 410, so that the first position part W1 and the second position part W2 are located between the first mandrel 410 and the second mandrel 420. In this step, the adsorbed first filter 100 is moved to a position between the first mandrel 410 and the second mandrel 420 again. When it is detected that the second pressure difference between the two sides of the adsorbed first filter 100 is less than or equal to the second preset pressure difference at this moment, the first filter 100 continues to be used to filter dirt clogging the first filter 100.

The first preset time for adsorption in the forward direction may be set based on the first pressure difference. When the first pressure difference is relatively large, the first preset time may be set to a relatively large value. When the first pressure difference is relatively small, the first preset time may be set to a relatively small value, to further reduce adsorption energy consumption when the cleaning effect is ensured. In this implementation, the first position part W1 is adjacent to the second position part W2. The sucker 210 sequentially adsorbs the first filter 100 step by step. In some implementations, the first position part W1 may partially overlap the second position part W2, to sufficiently adsorb the parts of the first filter 100. In some implementations, two motors 430 may be disposed to be respectively in rotatable connection to the first mandrel 410 and the second mandrel 420. When one of the motors 430 drives the first mandrel 410 to rotate, the first filter 100 may be driven to move toward the first mandrel 410, and when the other motor 430 drives the second mandrel 420 to rotate, the first filter 100 may be driven to move toward the second mandrel 420. In this way, the first filter 100 is controlled to reciprocate in the first direction A, and the sucker 210 can adsorb the first filter 100 for a plurality of times. For example, the first filter 100 is first controlled to move toward the second mandrel 420 along the first direction A. After the first filter 100 moves by a preset distance, the first filter 100 is controlled to move toward the first mandrel 410, and reciprocate for a plurality of times, to improve cleaning efficiency.

It should be noted that, that the two parts: the first position part W1 and the second position part W2 of the first filter 100 are adsorbed is shown in the foregoing step S221 to step S223. In actual application, a plurality of different parts of the first filter 100 may be adsorbed. In other words, the first filter 100 may be divided into a plurality of parts. After the sucker 210 finishes adsorbing each part of the first filter 100, all the parts of the first filter 100 that are adsorbed are moved to positions between the first mandrel 410 and the second mandrel 420 again in step S224. Because an opening area of the sucker 210 is usually less than an area of the first filter 100, the first filter 100 needs to be divided into at least two parts (that is, the first position part W1 and the second position part W2). As such, the first filter 100 needs to be adsorbed by the sucker 210 at least twice, to ensure that the sucker 210 completely adsorbs the first filter 100.

In this implementation, the sucker 210 includes an adsorption opening 211 away from an end of the vacuum pump 220 (as shown in FIG. 3), and the adsorption opening 211 is attached on a surface of the first filter 100 facing toward the air inlet side M. The dirt on the first filter 100 enters the sucker 210 through the adsorption opening 211. In an implementation, the adsorption assembly 200 further includes a sucking tube 230, where the sucking tube 230 is connected between the sucker 210 and the vacuum pump 220. In one aspect, the sucking tube 230 may be configured to: communicate with the sucker 210 and the vacuum pump 220, and provide a transmission channel for the dirt. In a further aspect, the sucking tube 230 has a particular length, so that mounting positions of the sucker 210 and the vacuum pump 220 are more flexible.

In an implementation, the adsorption assembly 200 further includes a dirt storage box 240. The dirt storage box 240 is connected to an end of the vacuum pump 220 that is away from the sucker 210, and is configured to collect dirt, to avoid recontamination.

Refer to FIG. 2 again. In a possible implementation, the frame 500 further includes a first side bar 530 and a second side bar 540 that are oppositely disposed on the two sides of the first filter 100 along a second direction B, the second direction B intersects with the first direction A, two ends of the sucker 210 along the second direction B are respectively fastened on the first side bar 530 and the second side bar 540, and a length of the sucker 210 along the second direction B is greater than or equal to a length of the first filter 100 along the second direction B. In this implementation, the second direction B is perpendicular to the first direction A. The two ends of the sucker 210 along the second direction B may be fastened on the first side bar 530 and the second side bar 540 by using screws, fasteners, binders, or connectors. In an implementation, a length of the first side bar 530 and the second side bar 540 along the first direction A may be the same as a length of the frame 500 along the first direction A. In some implementations, the length of the first side bar 530 and the second side bar 540 along the first direction A is less than the length of the frame 500 along the first direction A.

Refer to FIG. 11 again. In some implementations, the sucker 210 is hung on the top plate 510 by using a hinge 250. Specifically, there are connecting portions 212 on two ends of the sucker 210. There are two hinges 250. The two hinges 250 are respectively connected to the connecting portions 212 on the two ends of the sucker 210 along the second direction B. The motor 430 is disposed on the top plate 510. The motor 430 is in rotatable connection to an end of the hinge 250 that is away from the sucker 210. During work, the motor 430 may drive the hinge 250 to rotate, to further drive the sucker 210 to move up and down in the first direction A, thereby adsorbing the dirt on the first filter 100. As shown in FIG. 11, the sucker 210 adsorbs the first position part W1 of the first filter 100, and then the motor 430 works to drive the hinge 250 to rotate. The connecting portion 212 drives the sucker 210 to move in the first direction A toward the top plate 510, until the sucker 210 overlaps the second position part W2 (as shown in FIG. 12). In this case, the sucker 210 adsorbs the second position part W2 of the first filter 100. In some implementations, the connecting portion 212 may be disposed at an intermediate position of the sucker 210, and the hinge 250 is in rotatable connection to the connecting portion 212 in the middle of the sucker 210.

In some implementations, the motor 430 may drive the sucker 210 to move in a left-right, up-down, or inclined direction of the first filter 100. In this case, a width of the sucker 210 may be set to be less than a width of the first filter 100, so that the sucker 210 can walk at any position of the first filter 100, and a moving manner in which the sucker 210 adsorbs the dirt on the first filter 100 is more flexible, thereby helping improve efficiency of cleaning the first filter 100.

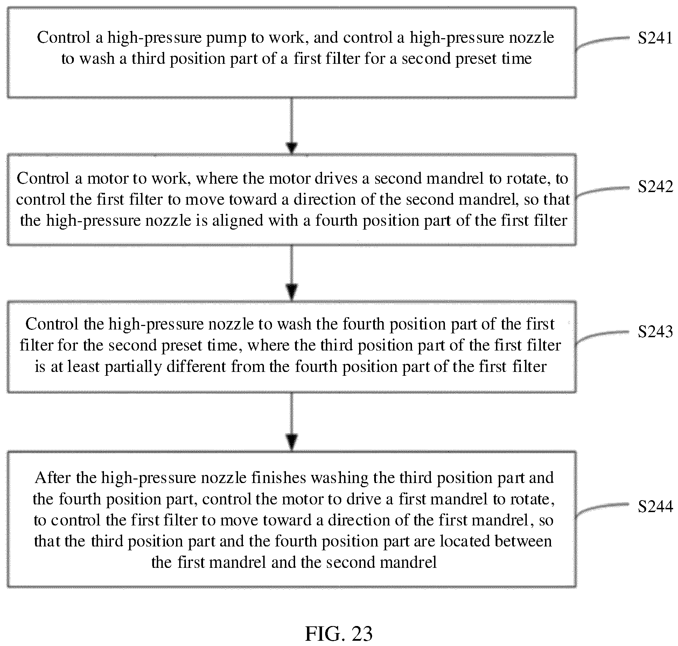

In a possible implementation, the washing assembly 300 includes a high-pressure nozzle 310 and a high-pressure pump 320 in communication with the high-pressure nozzle 310 (as shown in FIG. 3). The high-pressure nozzle 310 is located on a leeward side N of the first filter 100, and the motor 430 is further configured to drive the first mandrel 410 to rotate. Refer to FIG. 23. Step S240 specifically includes step S241, step S242, step S243, and step S244. Detailed steps are as follows.

Step S241. Control the high-pressure pump 320 to work, and control the high-pressure nozzle 310 to wash a third position part W3 of the first filter 100 for a second preset time (as shown in FIG. 13 and FIG. 14). There may be a plurality of high-pressure nozzles 310, to improve washing efficiency, and a specific quantity of the high-pressure nozzles 310 may be set based on a requirement, for example, set to 4, 8, or 10. In some implementations, there is a preset width of the high-pressure nozzle 310 in the second direction B, and there are a plurality of liquid outlets in the high-pressure nozzle 310. In an implementation, a width of the high-pressure nozzle 310 in the second direction B is equal to a width of the first filter 100 in the second direction B.

Step S242. Control the motor 430 to work, where the motor 430 drives the second mandrel 420 to rotate, to control the first filter 100 to move toward a direction of the second mandrel 420, so that the high-pressure nozzle 310 is aligned with a fourth position part W4 of the first filter 100 (as shown in FIG. 15 and FIG. 16). In this implementation, the motor 430 drives the second mandrel 420 to rotate, to control the first filter 100 to move toward a direction of the second mandrel 420, where the third position part W3 is located between the fourth position part W4 and the second mandrel 420. In some implementations, the motor 430 is in rotatable connection to the first mandrel 410, to drive the first mandrel 410 to rotate, to control the first filter 100 to move toward a direction of the first mandrel 410. In this case, the third position part W3 is located between the fourth position part W4 and the first mandrel 410. That the high-pressure nozzle 310 is aligned with the fourth position part W4 of the first filter 100 means that the high-pressure nozzle 310 can wash the fourth position part W4. For example, when the high-pressure nozzle 310 sprays washing liquid in a horizontal direction to wash the first filter 100, the high-pressure nozzle 310 may be vertically aligned with the first filter 100. When the high-pressure nozzle 310 sprays washing liquid at a preset angle to wash the first filter 100, there may be an included angle between the high-pressure nozzle 310 and the first filter 100, and the included angle is adjustable based on an actual requirement.

Step S243. Control the high-pressure nozzle 310 to wash the fourth position part W4 of the first filter 100 for the second preset time, where the third position part W3 of the first filter 100 is at least partially different from the fourth position part W4 of the first filter 100.

Step S244. After the high-pressure nozzle 310 finishes washing the third position part W3 and the fourth position part W4, control the motor 430 to drive the first mandrel 410 to rotate, to control the first filter 100 to move toward a direction of the first mandrel 410, so that the third position part W3 and the fourth position part W4 are located between the first mandrel 410 and the second mandrel 420. In this step, the washed first filter 100 is moved to a position between the first mandrel 410 and the second mandrel 420 again. When it is detected that the second pressure difference between the two sides of the washed first filter 100 is less than or equal to the second preset pressure difference at this moment, the first filter 100 continues to be used to filter dirt clogging the first filter 100.

The second preset time for washing in the reverse direction may be set based on the second pressure difference. When the second pressure difference is relatively large, the second preset time may be set to a relatively large value. When the second pressure difference is relatively small, the second preset time may be set to a relatively small value, to further reduce cleaning energy consumption when the cleaning effect is ensured. In this implementation, the third position part W3 is adjacent to the fourth position part W4. The high-pressure nozzle 310 sequentially washes the first filter 100 step by step. In some implementations, the third position part W3 may partially overlap the fourth position part W4, to sufficiently wash the first filter 100. In some implementations, the first filter 100 may be controlled to reciprocate in the first direction A, and the high-pressure nozzle 310 can wash the first filter 100 for a plurality of times. For example, the first filter 100 is first controlled to move toward the second mandrel 420 along the first direction A. After the first filter 100 moves by a preset distance, the first filter 100 is controlled to move toward the first mandrel 410 along the first direction A, and reciprocate for a plurality of times, to improve cleaning efficiency.

It should be noted that, that the two parts: the third position part W3 and the fourth position part W4 of the first filter 100 are washed is shown in the foregoing step S241 to step S243. In actual application, a plurality of different parts of the first filter 100 may be washed. In other words, the first filter 100 may be divided into a plurality of parts. After the high-pressure nozzle 310 finishes washing each part of the first filter 100, all the parts of the first filter 100 that are washed are moved to positions between the first mandrel 410 and the second mandrel 420 again in step S244. Washing is performed at least twice, to enable the first filter 100 to be washed completely.

In some implementations, when the high-pressure pump 320 works, the high-pressure nozzle 310 is controlled to spray washing liquid at a preset liquid outlet speed to the leeward side of the first filter 100. The preset liquid outlet speed may be set based on an actual situation, for example, based on the second pressure difference. When the second pressure difference is relatively large, the preset liquid outlet speed may be set to a relatively large value. When the second pressure difference is relatively small, the preset liquid outlet speed may be set to a relatively small value, so that the preset liquid outlet speed can be flexibly set, to save washing liquid when the cleaning effect is ensured. The preset liquid outlet speed may be controlled and adjusted by using the high-pressure pump 320.

In some implementations, the washing assembly 300 further includes a washing liquid tank 330. The high-pressure pump 320 is connected between the washing liquid tank 330 and the high-pressure nozzle 310, and the washing liquid tank 330 is configured to provide washing liquid. The washing liquid includes water or mixed liquid of water and detergent.

In an implementation, the third position part W3 overlaps the first position part W1, and the fourth position part W4 overlaps the second position part W2. In other words, a sequence in which the high-pressure nozzle 310 washes the first filter 100 is the same as a sequence in which the sucker 210 adsorbs the first filter 100, to ensure that any part that is adsorbed in the forward direction and that is on the first filter 100 is also washed in the reverse direction, to improve cleaning efficiency. In other implementations, the third position part W3 may partially overlap the first position part W1.

In an implementation, the high-pressure nozzle 310 is fastened on the frame 500 by using a nozzle bracket 311 (as shown in FIG. 14). In some implementations, the high-pressure nozzle 310 is hung on the top plate 510 by using a hinge. The hinge is in rotatable connection to the high-pressure nozzle 310. The motor 430 is disposed on the top plate 510. The motor 430 is in rotatable connection to an end of the hinge that is away from the high-pressure nozzle 310. During work, the motor 430 may drive the hinge to rotate, to further drive the high-pressure nozzle 310 to move up and down in the first direction A, thereby washing the dirt on the first filter 100.

In some implementations, the motor 430 may control the high-pressure nozzle 310 to move in a left-right, up-down, or inclined direction of the first filter 100. In this case, the high-pressure nozzle 310 can walk at any position of the first filter 100, and a moving manner in which the high-pressure nozzle 310 washes the dirt on the first filter 100 is more flexible, thereby helping improve efficiency of cleaning the first filter 100.

The filter cleaning system, the filter cleaning method, and the data center that are provided in the embodiments of this application are described in detail above. Specific examples are used in this specification to describe principles and embodiments of this application. The description in the foregoing embodiments is merely used to help understand the method and core idea of this application. In addition, persons of ordinary skill in the art may change specific embodiments and application scope based on the idea of this application. In conclusion, the content of this specification shall not be construed as a limitation on this application.

## Claims

1. A filter cleaning system (10), comprising a first filter (100), a first-stage cleaning unit (20), a sensing unit (600), and a control unit (700), wherein the filter cleaning system (10) further comprises a second-stage cleaning unit (30);
the first-stage cleaning unit (20) comprises at least one of an adsorption assembly (200), and a washing assembly (300);
the second-stage cleaning unit (30) comprises a motor (430) and a mandrel assembly (400), the mandrel assembly (400) comprises a first mandrel (410) and a second filter (110) wound on the first mandrel (410), and the motor (430) is configured to drive the mandrel assembly (400) to work, to replace at least one part of the first filter (100) with a part of the second filter (110);
the sensing unit (600) is configured to obtain a pressure parameter of two sides of the first filter (100); and
the control unit (700) is configured to control, based on the pressure parameter, the first-stage cleaning unit (20) and/or the second-stage cleaning unit (30) to work;
**characterized in that** the first-stage cleaning unit (20) further comprises a brush assembly (800), and the control unit (700) comprises a pressure obtaining subunit (710), a determining subunit (720), and an execution subunit (730), the determining subunit (720) is in a signal connection to the pressure obtaining subunit (710) and the execution subunit (730), the pressure obtaining subunit (710) is in a signal connection to the sensing unit (600), the first-stage cleaning unit (20) comprises the adsorption assembly (200) and the washing assembly (300), and the execution subunit (730) is electrically connected to the adsorption assembly (200) and the washing assembly (300); and that the control unit (700) is configured to control, based on the pressure parameter, the first-stage cleaning unit (20) and/or the second-stage cleaning unit (30) to work comprises:
the pressure obtaining subunit (710) is configured to obtain a first pressure difference between the two sides of the first filter (100), the determining subunit (720) is configured to determine whether the first pressure difference is greater than a first preset pressure difference, and when the first pressure difference is greater than the first preset pressure difference, the execution subunit (730) is configured to control the adsorption assembly (200) to adsorb the first filter (100) in a forward direction, to remove dirt; and
the pressure obtaining subunit (710) is further configured to obtain a second pressure difference between the two sides of the first filter (100) after adsorption ends, the determining subunit (720) is further configured to determine whether the second pressure difference is greater than a second preset pressure difference after adsorption ends, and when the second pressure difference is greater than the second preset pressure difference, the execution subunit (730) is further configured to control the washing assembly (300) to wash the first filter (100) in a reverse direction, wherein the second preset pressure difference is less than or equal to the first preset pressure difference.

2. The filter cleaning system (10) according to claim 1, wherein that the control unit (700) is configured to control, based on the pressure parameter that is of the two sides of the first filter (100) and that is obtained by the sensing unit (600), the first-stage cleaning unit (20) and/or the second-stage cleaning unit (30) to work further comprises:
the pressure obtaining subunit (710) is further configured to obtain a third pressure difference between the two sides of the first filter (100) after washing ends, the determining subunit (720) is further configured to determine whether the third pressure difference is greater than a third preset pressure difference after washing ends, and when the third pressure difference is greater than the third preset pressure difference, the execution subunit (730) is further configured to control the motor (430) to drive the mandrel assembly (400) to work, to replace at least one part of the first filter (100) with a part of the second filter, wherein the third preset pressure difference is less than or equal to the second preset pressure difference.

3. The filter cleaning system (10) according to claim 2, wherein the filter cleaning system (10) further comprises a frame (500), the mandrel assembly (400) further comprises a second mandrel (420), the first mandrel (410) and the second mandrel (420) are fastened on two ends of the frame (500) along a first direction, the second mandrel (420) is configured to wind the first filter (100), and the motor (430) is further configured to drive the second mandrel (420) to rotate; and
that the execution subunit (730) is further configured to control the motor (430) to drive the mandrel assembly (400) to work, to replace at least one part of the first filter (100) with a part of the second filter (110) comprises: the execution subunit (730) controls the motor (430) to work, and the motor (430) drives the second mandrel (420) to rotate, to drive the first filter (100) to move along the first direction at least by a preset distance with respect to the first mandrel (410) and the second mandrel (420), to wind at least one part of the first filter (100) on the second mandrel (420), and drive the second filter (110) to move along the first direction at least by a preset distance with respect to the first mandrel (410) and the second mandrel (420), to replace at least one part of the first filter (100) with a part of the second filter.

4. The filter cleaning system (10) according to claim 3, wherein the adsorption assembly (200) comprises a sucker (210) and a vacuum pump (220) in communication with the sucker (210), the sucker (210) is fastened on the frame (500) and is located on an air inlet side of the first filter (100), and the motor (430) is further configured to drive the first mandrel (410) to rotate; and
that the execution subunit (730) is configured to control the adsorption assembly (200) to adsorb the first filter (100) in a forward direction comprises:
the execution subunit (730) is configured to: control the vacuum pump (220) to work, and control the sucker (210) to adsorb a first position part (W 1) of the first filter (100) for a first preset time;
the execution subunit (730) is configured to control the motor (430) to work, and the motor (430) drives the second mandrel (420) to rotate, to control the first filter (100) to move toward a direction of the second mandrel (420), so that a second position part (W2) of the first filter (100) overlaps the sucker (210);
the execution subunit (730) is further configured to control the sucker (210) to adsorb the second position part (W2) of the first filter (100) for the first preset time, wherein the first position part (W1) of the first filter (100) is at least partially different from the second position part (W2) of the first filter (100); and
after the sucker (210) finishes adsorbing the first position part (W1) and the second position part (W2), the execution subunit (730) is further configured to control the motor (430) to drive the first mandrel (410) to rotate, to control the first filter (100) to move toward a direction of the first mandrel, so that the first position part (W1) and the second position part (W2) are located between the first mandrel (410) and the second mandrel (420).

5. The filter cleaning system (10) according to claim 4, wherein the frame (500) further comprises a first side bar (530) and a second side bar (540) that are oppositely disposed on the two sides of the first filter (100) along a second direction, the second direction intersects with the first direction, two ends of the sucker (210) along the second direction are respectively fastened on the first side bar (530) and the second side bar (540), and a length of the sucker (210) along the second direction is greater than or equal to a length of the first filter (100) along the second direction.

6. The filter cleaning system (10) according to claim 4, wherein the first-stage cleaning unit (20) further comprises the brush assembly (800), and the brush assembly (800) is disposed on a side of the sucker (210) that is close to the first mandrel (410).

7. The filter cleaning system (10) according to claim 3, wherein the washing assembly (300) comprises a high-pressure nozzle (310) and a high-pressure pump (320) in communication with the high-pressure nozzle (310), the high-pressure nozzle (310) is located on a leeward side of the first filter (100), the motor (430) is further configured to drive the first mandrel (410) to rotate, and the execution subunit (730) is electrically connected to the high-pressure pump (320) and controls the high-pressure pump (320) to work; and
that the execution subunit (730) is further configured to control the washing assembly (300) to wash the first filter (100) in a reverse direction comprises:
the execution subunit (730) is further configured to: control the high-pressure pump (320) to work, and control the high-pressure nozzle (310) to wash a third position part of the first filter (100) for a second preset time;
the execution subunit (730) is further configured to control the motor (430) to work, and the motor (430) drives the second mandrel (420) to rotate, to control the first filter (100) to move toward a direction of the second mandrel (420), so that the high-pressure nozzle (310) is aligned with a fourth position part of the first filter (100);
the execution subunit (730) is further configured to control the high-pressure nozzle (310) to wash the fourth position part of the first filter (100) for the second preset time, wherein the third position part of the first filter (100) is at least partially different from the fourth position part of the first filter (100); and
after the high-pressure nozzle (310) finishes washing the third position part and the fourth position part, the execution subunit (730) is further configured to control the motor (430) to drive the first mandrel (410) to rotate, to control the first filter (100) to move toward a direction of the first mandrel (410), so that the third position part and the fourth position part are located between the first mandrel (410) and the second mandrel (420).

8. The filter cleaning system (10) according to claim 7, wherein the execution subunit (730) is further configured to control the high-pressure pump (320) to work, so that the high-pressure nozzle (310) sprays washing liquid to the leeward side of the first filter (100) at a preset liquid outlet speed.

9. The filter cleaning system (10) according to claim 3, wherein the sensing unit (600) comprises a first probe (610) and a second probe (620) that are respectively located on an air inlet side and a leeward side of the first filter (100), and the first probe (610) and the second probe (620) are fastened on the frame (500).

10. A data center (1), wherein the data center (1) comprises an IT room (11), a fan (12), and the filter cleaning system (10) according to any one of claims 1 to 9, the fan (12) and the filter cleaning system (10) are located in the IT room (11), and the first filter (100) is disposed on an air inlet side of the fan (12).

11. A filter cleaning method, applied to a filter cleaning system (10), wherein the filter cleaning system (10) comprises a first filter (100), a first-stage cleaning unit (20), and a sensing unit (600), the filter cleaning system (10) further comprises a second-stage cleaning unit (30), the first-stage cleaning unit (20) comprises at least one of an adsorption assembly (200), and a washing assembly (300), the second-stage cleaning unit (30) comprises a motor (430) and a mandrel assembly (400), the mandrel assembly (400) comprises a first mandrel (410) and a second filter (110) wound on the first mandrel, the motor (430) is configured to drive the mandrel assembly (400) to work, to replace at least one part of the first filter (100) with a part of the second filter, and the sensing unit is configured to obtain a pressure parameter of two sides of the first filter (100); and
the filter cleaning method comprises:
obtaining the pressure parameter of the two sides of the first filter (100); and
controlling, based on the pressure parameter, the first-stage cleaning unit (20) and/or the second-stage cleaning unit (30) to work;
**characterized in that** the first-stage cleaning unit (20) further comprises a brush assembly (800), and the filter cleaning system (10) further comprises a control unit (700) comprising a pressure obtaining subunit (710), a determining subunit (720), and an execution subunit (730), the determining subunit (720) is in a signal connection to the pressure obtaining subunit (710) and the execution subunit (730), the pressure obtaining subunit (710) is in a signal connection to the sensing unit (600), the first-stage cleaning unit (20) comprises the adsorption assembly (200) and the washing assembly (300), and the execution subunit (730) is electrically connected to the adsorption assembly (200) and the washing assembly (300); and that the control unit (700) is configured to control, based on the pressure parameter, the first-stage cleaning unit (20) and/or the second-stage cleaning unit (30) to work comprises:
the pressure obtaining subunit (710) is configured to obtain a first pressure difference between the two sides of the first filter (100), the determining subunit (720) is configured to determine whether the first pressure difference is greater than a first preset pressure difference, and when the first pressure difference is greater than the first preset pressure difference, the execution subunit (730) is configured to control the adsorption assembly (200) to adsorb the first filter (100) in a forward direction, to remove dirt; and
the pressure obtaining subunit (710) is further configured to obtain a second pressure difference between the two sides of the first filter (100) after adsorption ends, the determining subunit (720) is further configured to determine whether the second pressure difference is greater than a second preset pressure difference after adsorption ends, and when the second pressure difference is greater than the second preset pressure difference, the execution subunit (730) is further configured to control the washing assembly (300) to wash the first filter (100) in a reverse direction, wherein the second preset pressure difference is less than or equal to the first preset pressure difference.

12. The filter cleaning method according to claim 11, wherein the first-stage cleaning unit (20) comprises the adsorption assembly (200) and the washing assembly (300), and the obtaining the pressure parameter of the two sides of the first filter (100) comprises:
Obtaining (S 110) a first pressure difference between the two sides of the first filter (100);
the controlling, based on the pressure parameter, the first-stage cleaning unit (20) and/or the second-stage cleaning unit (30) to work comprises:
determining (S210) whether the first pressure difference is greater than a first preset pressure difference; and
when the first pressure difference is greater than the first preset pressure difference, controlling (S220) the adsorption assembly (200) to adsorb the first filter (100) in a forward direction, to remove dirt;
the obtaining the pressure parameter of the two sides of the first filter (100) further comprises:
obtaining (S 120) a second pressure difference between the two sides of the first filter (100) after adsorption ends; and
the controlling, based on the pressure parameter, the first-stage cleaning unit (20) and/or the second-stage cleaning unit (30) to work further comprises:
determining (S230) whether the second pressure difference is greater than a second preset pressure difference, wherein the second preset pressure difference is less than or equal to the first preset pressure difference; and
when the second pressure difference is greater than the second preset pressure difference, controlling (S240) the washing assembly (300) to wash the first filter (100) in a reverse direction.

13. The filter cleaning method according to claim 12, wherein the obtaining the pressure parameter of the two sides of the first filter (100) comprises:
Obtaining (S130) a third pressure difference between the two sides of the first filter (100); and
the controlling, based on the pressure parameter, the first-stage cleaning unit (20) and/or the second-stage cleaning unit (30) to work comprises:
determining (S260) whether the third pressure difference is greater than a third preset pressure difference, wherein the third preset pressure difference is less than or equal to the second preset pressure difference; and
when the third pressure difference is greater than the third preset pressure difference, controlling (S270) the motor (430) to drive the mandrel assembly (400) to work, to replace at least one part of the first filter (100) with a part of the second filter.

14. The filter cleaning method according to claim 12, wherein when the second pressure difference is less than or equal to the second preset pressure difference, cleaning ends (S250).

## Patentansprüche

1. Filterreinigungssystem (10), das einen ersten Filter (100), eine Erststufen-Reinigungseinheit (20), eine Erfassungseinheit (600) und eine Steuereinheit (700) umfasst, wobei das Filterreinigungssystem (10) ferner eine Zweitstufen-Reinigungseinheit (30) umfasst;
die Erststufen-Reinigungseinheit (20) mindestens eine von einer Adsorptionsanordnung (200) und einer Waschanordnung (300) umfasst;
die Zweitstufen-Reinigungseinheit (30) einen Motor (430) und eine Dornanordnung (400) umfasst, die Dornanordnung (400) einen ersten Dorn (410) und einen zweiten Filter (110) umfasst, der auf den ersten Dorn (410) gewickelt ist, und der Motor (430) konfiguriert ist, um die Dornanordnung (400) anzutreiben, um zu arbeiten, um mindestens einen Teil des ersten Filters (100) durch einen Teil des zweiten Filters (110) zu ersetzen;
die Erfassungseinheit (600) konfiguriert ist, um einen Druckparameter von zwei Seiten des ersten Filters (100) zu erhalten; und
die Steuereinheit (700) konfiguriert ist, um basierend auf dem Druckparameter die Erststufen-Reinigungseinheit (20) und/oder die Zweitstufen-Reinigungseinheit (30) zu steuern, um zu arbeiten;
**dadurch gekennzeichnet, dass** die Erststufen-Reinigungseinheit (20) ferner eine Bürstenanordnung (800) umfasst und die Steuereinheit (700) eine Druckerhaltungsuntereinheit (710), eine Bestimmungsuntereinheit (720) und eine Ausführungsuntereinheit (730) umfasst, wobei die Bestimmungsuntereinheit (720) in einer Signalverbindung mit der Druckerhaltungsuntereinheit (710) und der Ausführungsuntereinheit (730) ist, die Druckerhaltungsuntereinheit (710) in einer Signalverbindung mit der Erfassungseinheit (600) ist, die Erststufen-Reinigungseinheit (20) die Adsorptionsanordnung (200) und die Waschanordnung (300) umfasst, und die Ausführungsuntereinheit (730) mit der Adsorptionsanordnung (200) und der Waschanordnung (300) elektrisch verbunden ist; und dass die Steuereinheit (700) konfiguriert ist, um basierend auf dem Druckparameter die Erststufen-Reinigungseinheit (20) und/oder die Zweitstufen-Reinigungseinheit (30) zu steuern, um zu arbeiten, umfasst:
dass die Druckerhaltungsuntereinheit (710) konfiguriert ist, um eine erste Druckdifferenz zwischen den zwei Seiten des ersten Filters (100) zu erhalten, die Bestimmungsuntereinheit (720) konfiguriert ist, um zu bestimmen, ob die erste Druckdifferenz größer als eine erste voreingestellte Druckdifferenz ist und wenn die erste Druckdifferenz größer als die erste voreingestellte Druckdifferenz ist, die Ausführungsuntereinheit (730) konfiguriert ist, um die Adsorptionsanordnung (200) zu steuern, um den ersten Filter (100) in einer Vorwärtsrichtung zu adsorbieren, um Schmutz zu entfernen; und
die Druckerhaltungsuntereinheit (710) ferner konfiguriert ist, um eine zweite Druckdifferenz zwischen den zwei Seiten des ersten Filters (100) zu erhalten, nachdem die Adsorption beendet ist, die Bestimmungsuntereinheit (720) ferner konfiguriert ist, um zu bestimmen, ob die zweite Druckdifferenz größer als eine zweite voreingestellte Druckdifferenz ist, nachdem die Adsorption beendet ist, und wenn die zweite Druckdifferenz größer als die zweite voreingestellte Druckdifferenz ist, die Ausführungsuntereinheit (730) ferner konfiguriert ist, um die Waschanordnung (300) zu steuern, um den ersten Filter (100) in einer umgekehrten Richtung zu waschen, wobei die zweite voreingestellte Druckdifferenz kleiner als oder gleich der ersten voreingestellten Druckdifferenz ist.

2. Filterreinigungssystem (10) nach Anspruch 1, wobei, dass die Steuereinheit (700) konfiguriert ist, um basierend auf dem Druckparameter, der von den zwei Seiten des ersten Filters (100) stammt und der durch das Erfassungseinheit (600) erhalten wird, die Erststufen-Reinigungseinheit (20) und/oder die Zweitstufen-Reinigungseinheit (30) zu steuern, um zu arbeiten, ferner umfasst:
dass die Druckerhaltungsuntereinheit (710) ferner konfiguriert ist, um eine dritte Druckdifferenz zwischen den zwei Seiten des ersten Filters (100) zu erhalten, nachdem das Waschen beendet ist, die Bestimmungsuntereinheit (720) ferner konfiguriert ist, um zu bestimmen, ob die dritte Druckdifferenz größer als eine dritte voreingestellte Druckdifferenz ist, nachdem das Waschen beendet ist, und wenn die dritte Druckdifferenz größer als die dritte voreingestellte Druckdifferenz ist, die Ausführungsuntereinheit (730) ferner konfiguriert ist, um den Motor (430) zu steuern, um die Dornanordnung (400) anzutreiben, um zu arbeiten, um mindestens einen Teil des ersten Filters (100) durch einen Teil des zweiten Filters zu ersetzen, wobei die dritte voreingestellte Druckdifferenz kleiner als oder gleich der zweiten voreingestellten Druckdifferenz ist.

3. Filterreinigungssystem (10) nach Anspruch 2, wobei das Filterreinigungssystem (10) ferner einen Rahmen (500) umfasst, die Dornanordnung (400) ferner einen zweiten Dorn (420) umfasst, der erste Dorn (410) und der zweite Dorn (420) an zwei Enden des Rahmens (500) entlang einer ersten Richtung befestigt sind, der zweite Dorn (420) konfiguriert ist, um den ersten Filter (100) aufzuwickeln, und der Motor (430) ferner konfiguriert ist, um den zweiten Dorn (420) anzutreiben, um sich zu drehen; und
dass die Ausführungsuntereinheit (730) ferner konfiguriert ist, um den Motor (430) zu steuern, um die Dornanordnung (400) anzutreiben, um zu arbeiten, um mindestens einen Teil des ersten Filters (100) durch einen Teil des zweiten Filters (110) zu ersetzen, umfasst: dass die Ausführungsuntereinheit (730) den Motor (430) steuert, um zu arbeiten, und der Motor (430) den zweiten Dorn (420) antreibt, um sich zu drehen, um den ersten Filter (100) anzutreiben, um sich entlang der ersten Richtung mindestens um einen voreingestellten Abstand in Bezug auf den ersten Dorn (410) und den zweiten Dorn (420) zu bewegen, um mindestens einen Teil des ersten Filters (100) auf den zweiten Dorn (420) zu wickeln und den zweiten Filter (110) anzutreiben, um sich entlang der ersten Richtung mindestens um einen voreingestellten Abstand in Bezug auf den ersten Dorn (410) und den zweiten Dorn (420) zu bewegen, um mindestens einen Teil des ersten Filters (100) durch einen Teil des zweiten Filters zu ersetzen.

4. Filterreinigungssystem (10) nach Anspruch 3, wobei die Adsorptionsanordnung (200) einen Sauger (210) und eine Vakuumpumpe (220) in Verbindung mit dem Sauger (210) umfasst, wobei der Sauger (210) an dem Rahmen (500) befestigt ist und sich auf einer Lufteinlassseite des ersten Filters (100) befindet, und der Motor (430) ferner konfiguriert ist, um den ersten Dorn (410) anzutreiben, um sich zu drehen; und
dass die Ausführungsuntereinheit (730) konfiguriert ist, um die Adsorptionsanordnung (200) zu steuern, um den ersten Filter (100) in einer Vorwärtsrichtung zu adsorbieren, umfasst:
dass die Ausführungsuntereinheit (730) konfiguriert ist zum: Steuern der Vakuumpumpe (220), um zu arbeiten, und Steuern des Saugers (210), um einen ersten Positionsteil (W1) des ersten Filters (100) für eine erste voreingestellte Zeit zu adsorbieren;
dass die Ausführungsuntereinheit (730) konfiguriert ist, um den Motor (430) zu steuern, um zu arbeiten, und der Motor (430) den zweiten Dorn (420) antreibt, um sich zu drehen, um den ersten Filter (100) zu steuern, um sich in eine Richtung des zweiten Dorns (420) zu bewegen, sodass ein zweiter Positionsteil (W2) des ersten Filters (100) den Sauger (210) überlappt;
dass die Ausführungsuntereinheit (730) ferner konfiguriert ist, um den Sauger (210) zu steuern, um den zweiten Positionsteil (W2) des ersten Filters (100) für die erste voreingestellte Zeit zu adsorbieren, wobei sich der erste Positionsteil (W1) des ersten Filters (100) mindestens teilweise von dem zweiten Positionsteil (W2) des ersten Filters (100) unterscheidet; und
nachdem der Sauger (210) das Adsorbieren des ersten Positionsteils (W1) und des zweiten Positionsteils (W2) abgeschlossen hat, ist die Ausführungsuntereinheit (730) ferner konfiguriert, um den Motor (430) zu steuern, um den ersten Dorn (410) anzutreiben, um sich zu drehen, um den ersten Filter (100) zu steuern, um sich in eine Richtung des ersten Dorns zu bewegen, sodass sich der erste Positionsteil (W1) und der zweite Positionsteil (W2) zwischen dem ersten Dorn (410) und dem zweiten Dorn (420) befinden.

5. Filterreinigungssystem (10) nach Anspruch 4, wobei der Rahmen (500) ferner eine erste Seitenstange (530) und eine zweite Seitenstange (540) umfasst, die gegenüberliegend auf den zwei Seiten des ersten Filters (100) entlang einer zweiten Richtung angeordnet sind, die zweite Richtung die erste Richtung schneidet, zwei Enden des Saugers (210) entlang der zweiten Richtung jeweils an der ersten Seitenstange (530) und der zweiten Seitenstange (540) befestigt sind, und eine Länge des Saugers (210) entlang der zweiten Richtung größer als oder gleich einer Länge des ersten Filters (100) entlang der zweiten Richtung ist.

6. Filterreinigungssystem (10) nach Anspruch 4, wobei die Erststufen-Reinigungseinheit (20) ferner die Bürstenanordnung (800) umfasst und die Bürstenanordnung (800) auf einer Seite des Saugers (210) angeordnet ist, die nahe an dem ersten Dorn (410) ist.

7. Filterreinigungssystem (10) nach Anspruch 3, wobei die Waschanordnung (300) eine Hochdruckdüse (310) und eine Hochdruckpumpe (320) in Verbindung mit der Hochdruckdüse (310) umfasst, sich die Hochdruckdüse (310) auf einer Leeseite des ersten Filters (100) befindet, der Motor (430) ferner konfiguriert ist, um den ersten Dorn (410) anzutreiben, um sich zu drehen, und die Ausführungsuntereinheit (730) mit der Hochdruckpumpe (320) elektrisch verbunden ist und die Hochdruckpumpe (320) steuert, um zu arbeiten; und
dass die Ausführungsuntereinheit (730) ferner konfiguriert ist, um die Waschanordnung (300) zu steuern, um den ersten Filter (100) in einer umgekehrten Richtung zu waschen, umfasst:
dass die Ausführungsuntereinheit (730) ferner konfiguriert ist zum: Steuern der Hochdruckpumpe (320), um zu arbeiten, und Steuern der Hochdruckdüse (310), um einen dritten Positionsteil des ersten Filters (100) für eine zweite voreingestellte Zeit zu waschen;
dass die Ausführungsuntereinheit (730) ferner konfiguriert ist, um den Motor (430) zu steuern, um zu arbeiten, und der Motor (430) den zweiten Dorn (420) antreibt, um sich zu drehen, um den ersten Filter (100) zu steuern, um sich in eine Richtung des zweiten Dorns (420) zu bewegen, sodass die Hochdruckdüse (310) mit einem vierten Positionsteil des ersten Filters (100) ausgerichtet ist;
die Ausführungsuntereinheit (730) ferner konfiguriert ist, um die Hochdruckdüse (310) zu steuern, um den vierten Positionsteil des ersten Filters (100) für die zweite voreingestellte Zeit zu waschen, wobei sich der dritte Positionsteil des ersten Filters (100) mindestens teilweise von dem vierten Positionsteil des ersten Filters (100) unterscheidet; und
nachdem die Hochdruckdüse (310) das Waschen des dritten Positionsteils und des vierten Positionsteils abgeschlossen hat, ist die Ausführungsuntereinheit (730) ferner konfiguriert, um den Motor (430) zu steuern, um den ersten Dorn (410) anzutreiben, um sich zu drehen, um den ersten Filter (100) zu steuern, um sich in eine Richtung des ersten Dorns (410) zu bewegen, sodass sich der dritte Positionsteil und der vierte Positionsteil zwischen dem ersten Dorn (410) und dem zweiten Dorn (420) befinden.

8. Filterreinigungssystem (10) nach Anspruch 7, wobei die Ausführungsuntereinheit (730) ferner konfiguriert ist, um die Hochdruckpumpe (320) zu steuern, um zu arbeiten, sodass die Hochdruckdüse (310) Waschflüssigkeit auf die Leeseite des ersten Filters (100) mit einer voreingestellten Flüssigkeitsauslassgeschwindigkeit sprüht.

9. Filterreinigungssystem (10) nach Anspruch 3, wobei die Erfassungseinheit (600) eine erste Sonde (610) und eine zweite Sonde (620) umfasst, die sich jeweils auf einer Lufteinlassseite und einer Leeseite des ersten Filters (100) befinden, und die erste Sonde (610) und die zweite Sonde (620) an dem Rahmen (500) befestigt sind.

10. Datenzentrum (1), wobei das Datenzentrum (1) einen IT-Raum (11), einen Ventilator (12) und das Filterreinigungssystem (10) nach einem der Ansprüche 1 bis 9 umfasst, wobei sich der Ventilator (12) und das Filterreinigungssystem (10) in dem IT-Raum (11) befinden und der erste Filter (100) auf einer Lufteinlassseite des Ventilators (12) angeordnet ist.

11. Filterreinigungsverfahren, angewendet auf ein Filterreinigungssystem (10), wobei das Filterreinigungssystem (10) einen ersten Filter (100), eine Erststufen-Reinigungseinheit (20) und eine Sensoreinheit (600) umfasst, das Filterreinigungssystem (10) ferner eine Zweitstufen-Reinigungseinheit (30) umfasst, die Erststufen-Reinigungseinheit (20) mindestens eine von einer Adsorptionsanordnung (200) und einer Waschanordnung (300) umfasst, die Zweitstufen-Reinigungseinheit (30) einen Motor (430) und eine Dornanordnung (400) umfasst, die Dornanordnung (400) einen ersten Dorn (410) und einen zweiten Filter (110) umfasst, der auf den ersten Dorn gewickelt ist, der Motor (430) konfiguriert ist, um die Dornanordnung (400) anzutreiben, um zu arbeiten, um mindestens einen Teil des ersten Filters (100) durch einen Teil des zweiten Filters zu ersetzen, und die Erfassungseinheit konfiguriert ist, um einen Druckparameter von zwei Seiten des ersten Filters (100) zu erhalten; und
das Filterreinigungsverfahren umfasst:
Erhalten des Druckparameters der zwei Seiten des ersten Filters (100); und
Steuern, basierend auf dem Druckparameter, der Erststufen-Reinigungseinheit (20) und/oder der Zweitstufen-Reinigungseinheit (30), um zu arbeiten;
**dadurch gekennzeichnet, dass** die Erststufen-Reinigungseinheit (20) ferner eine Bürstenanordnung (800) umfasst und das Filterreinigungssystem (10) ferner eine Steuereinheit (700) umfasst, die eine Druckerhaltungsuntereinheit (710), eine Bestimmungsuntereinheit (720) und eine Ausführungsuntereinheit (730) umfasst, die Bestimmungsuntereinheit (720) in einer Signalverbindung mit der Druckerhaltungsuntereinheit (710) und der Ausführungsuntereinheit (730) ist, die Druckerhaltungsuntereinheit (710) in einer Signalverbindung mit der Erfassungseinheit (600) ist, die Erststufen-Reinigungseinheit (20) die Adsorptionsanordnung (200) und die Waschanordnung (300) umfasst, und die Ausführungsuntereinheit (730) mit der Adsorptionsanordnung (200) und der Waschanordnung (300) elektrisch verbunden ist; und dass die Steuereinheit (700) konfiguriert ist, um basierend auf dem Druckparameter die Erststufen-Reinigungseinheit (20) und/oder die Zweitstufen-Reinigungseinheit (30) zu steuern, um zu arbeiten, umfasst:
dass die Druckerhaltungsuntereinheit (710) konfiguriert ist, um eine erste Druckdifferenz zwischen den zwei Seiten des ersten Filters (100) zu erhalten, die Bestimmungsuntereinheit (720) konfiguriert ist, um zu bestimmen, ob die erste Druckdifferenz größer als eine erste voreingestellte Druckdifferenz ist und wenn die erste Druckdifferenz größer als die erste voreingestellte Druckdifferenz ist, die Ausführungsuntereinheit (730) konfiguriert ist, um die Adsorptionsanordnung (200) zu steuern, um den ersten Filter (100) in einer Vorwärtsrichtung zu adsorbieren, um Schmutz zu entfernen; und
die Druckerhaltungsuntereinheit (710) ferner konfiguriert ist, um eine zweite Druckdifferenz zwischen den zwei Seiten des ersten Filters (100) zu erhalten, nachdem die Adsorption beendet ist, die Bestimmungsuntereinheit (720) ferner konfiguriert ist, um zu bestimmen, ob die zweite Druckdifferenz größer als eine zweite voreingestellte Druckdifferenz ist, nachdem die Adsorption beendet ist, und wenn die zweite Druckdifferenz größer als die zweite voreingestellte Druckdifferenz ist, die Ausführungsuntereinheit (730) ferner konfiguriert ist, um die Waschanordnung (300) zu steuern, um den ersten Filter (100) in einer umgekehrten Richtung zu waschen, wobei die zweite voreingestellte Druckdifferenz kleiner als oder gleich der ersten voreingestellten Druckdifferenz ist.

12. Filterreinigungsverfahren nach Anspruch 11, wobei die Erststufen-Reinigungseinheit (20) die Adsorptionsanordnung (200) und die Waschanordnung (300) umfasst und das Erhalten des Druckparameters der zwei Seiten des ersten Filters (100) umfasst:
Erhalten (S110) einer ersten Druckdifferenz zwischen den zwei Seiten des ersten Filters (100);
das Steuern, basierend auf dem Druckparameter, der Erststufen-Reinigungseinheit (20) und/oder der Zweitstufen-Reinigungseinheit (30), um zu arbeiten, umfasst:
Bestimmen (S210), ob die erste Druckdifferenz größer als eine erste voreingestellte Druckdifferenz ist; und
wenn die erste Druckdifferenz größer als die erste voreingestellte Druckdifferenz ist, Steuern (S220) der Adsorptionsanordnung (200), um den ersten Filter (100) in einer Vorwärtsrichtung zu adsorbieren, um Schmutz zu entfernen;
das Erhalten des Druckparameters der zwei Seiten des ersten Filters (100) ferner umfasst:
Erhalten (S120) einer zweiten Druckdifferenz zwischen den zwei Seiten des ersten Filters (100), nachdem die Adsorption beendet ist;
und
das Steuern, basierend auf dem Druckparameter, der Erststufen-Reinigungseinheit (20) und/oder der Zweitstufen-Reinigungseinheit (30), um zu arbeiten, ferner umfasst:
Bestimmen (S230), ob die zweite Druckdifferenz größer als eine zweite voreingestellte Druckdifferenz ist, wobei die zweite voreingestellte Druckdifferenz kleiner als oder gleich der ersten voreingestellten Druckdifferenz ist; und
wenn die zweite Druckdifferenz größer als die zweite voreingestellte Druckdifferenz ist, Steuern (S240) der Waschanordnung (300), um den ersten Filter (100) in einer umgekehrten Richtung zu waschen.

13. Filterreinigungsverfahren nach Anspruch 12, wobei das Erhalten des Druckparameters der zwei Seiten des ersten Filters (100) umfasst:
Erhalten (S130) einer dritten Druckdifferenz zwischen den zwei Seiten des ersten Filters (100); und
das Steuern, basierend auf dem Druckparameter, der Erststufen-Reinigungseinheit (20) und/oder der Zweitstufen-Reinigungseinheit (30), um zu arbeiten, umfasst:
Bestimmen (S260), ob die dritte Druckdifferenz größer als eine dritte voreingestellte Druckdifferenz ist, wobei die dritte voreingestellte Druckdifferenz kleiner als oder gleich der zweiten voreingestellten Druckdifferenz ist; und
wenn die dritte Druckdifferenz größer als die dritte voreingestellte Druckdifferenz ist, Steuern (S270) des Motors (430), um die Dornanordnung (400) anzutreiben, um zu arbeiten, um mindestens einen Teil des ersten Filters (100) durch einen Teil des zweiten Filters zu ersetzen.

14. Filterreinigungsverfahren nach Anspruch 12, wobei, wenn die zweite Druckdifferenz kleiner als oder gleich der zweiten voreingestellten Druckdifferenz ist, das Reinigen beendet ist (S250).

## Revendications

1. Système de nettoyage de filtre (10), comprenant un premier filtre (100), une unité de nettoyage de première étape (20), une unité de détection (600) et une unité de commande (700), dans lequel le système de nettoyage de filtre (10) comprend une unité de nettoyage de seconde étape (30) ;
l'unité de nettoyage de première étape (20) comprend au moins l'un d'un ensemble d'adsorption (200) et d'un ensemble de lavage (300) ;
l'unité de nettoyage de seconde étape (30) comprend un moteur (430) et un ensemble mandrin (400), l'ensemble mandrin (400) comprend un premier mandrin (410) et un second filtre (110) enroulé sur le premier mandrin (410), et le moteur (430) est configuré pour entraîner le fonctionnement de l'ensemble mandrin (400), pour remplacer au moins une partie du premier filtre (100) par une partie du second filtre (110) ;
l'unité de détection (600) est configurée pour obtenir un paramètre de pression de deux côtés du premier filtre (100) ; et
l'unité de commande (700) est configurée pour commander le fonctionnement, sur la base du paramètre de pression, de l'unité de nettoyage de première étape (20) et/ou l'unité de nettoyage de seconde étape (30) ;
**caractérisé en ce que** l'unité de nettoyage de première étape (20) comprend en outre un ensemble brosse (800), et l'unité de commande (700) comprend une sous-unité d'obtention de pression (710), une sous-unité de détermination (720) et une sous-unité d'exécution (730), la sous-unité de détermination (720) est en connexion de signal avec la sous-unité d'obtention de pression (710) et la sous-unité d'exécution (730), la sous-unité d'obtention de pression (710) est en connexion de signal avec l'unité de détection (600), l'unité de nettoyage de première étape (20) comprend l'ensemble d'adsorption (200) et l'ensemble lavage (300), et la sous-unité d'exécution (730) est connectée électriquement à l'ensemble d'adsorption (200) et à l'ensemble lavage (300) ; et **en ce que** l'unité de commande (700) est configurée pour commander le fonctionnement, sur la base du paramètre de pression, de l'unité de nettoyage de premier étage (20) et/ou l'unité de nettoyage de seconde étape (30) comprend :
la sous-unité d'obtention de pression (710) est configurée pour obtenir une première différence de pression entre les deux côtés du premier filtre (100), la sous-unité de détermination (720) est configurée pour déterminer si la première différence de pression est supérieure à une première différence de pression prédéfinie, et lorsque la première différence de pression est supérieure à la première différence de pression prédéfinie, la sous-unité d'exécution (730) est configurée pour commander l'adsorption de l'ensemble d'adsorption (200) du premier filtre (100) dans une direction vers l'avant, afin d'éliminer la saleté ; et
la sous-unité d'obtention de pression (710) est en outre configurée pour obtenir une deuxième différence de pression entre les deux côtés du premier filtre (100) après la fin de l'adsorption, la sous-unité de détermination (720) est en outre configurée pour déterminer si la deuxième différence de pression est supérieure à une deuxième différence de pression prédéfinie après la fin de l'adsorption, et lorsque la deuxième différence de pression est supérieure à la deuxième différence de pression prédéfinie, la sous-unité d'exécution (730) est en outre configurée pour commander l'ensemble lavage (300) afin de laver le premier filtre (100) dans une direction inverse, dans lequel la deuxième différence de pression prédéfinie est inférieure ou égale à la première différence de pression prédéfinie.

2. Système de nettoyage de filtre (10) selon la revendication 1, dans lequel le fait que l'unité de commande (700) est configurée pour commander le fonctionnement, sur la base du paramètre de pression qui est des deux côtés du premier filtre (100) et qui est obtenu par la détection (600), de l'unité de nettoyage de première étape (20) et/ou l'unité de nettoyage de seconde étape (30) comprend en outre :
la sous-unité d'obtention de pression (710) est en outre configurée pour obtenir une troisième différence de pression entre les deux côtés du premier filtre (100) après la fin du lavage, la sous-unité de détermination (720) est en outre configurée pour déterminer si la troisième différence de pression est supérieure à une troisième différence de pression prédéfinie après la fin du lavage, et lorsque la troisième différence de pression est supérieure à la troisième différence de pression prédéfinie, la sous-unité d'exécution (730) est en outre configurée pour commander le moteur (430) afin d'entraîner le fonctionnement de l'ensemble mandrin (400), pour remplacer au moins une partie du premier filtre (100) par une partie du second filtre, dans lequel la troisième différence de pression prédéfinie est inférieure ou égale à la deuxième différence de pression prédéfinie.

3. Système de nettoyage de filtre (10) selon la revendication 2, dans lequel le système de nettoyage de filtre (10) comprend en outre un cadre (500), l'ensemble mandrin (400) comprend en outre un second mandrin (420), le premier mandrin (410) et le second mandrin (420) sont fixés sur deux extrémités du cadre (500) le long d'une première direction, le second mandrin (420) est conçu pour enrouler le premier filtre (100), et le moteur (430) est en outre configuré pour entraîner la rotation du second mandrin (420) ; et
le fait que la sous-unité d'exécution (730) est en outre configurée pour commander le moteur (430) pour entraîner le fonctionnement de l'ensemble mandrin (400), pour remplacer au moins une partie du premier filtre (100) par une partie du second filtre (110) comprend : la sous-unité d'exécution (730) commande le fonctionnement du moteur (430), et le moteur (430) entraîne la rotation du second mandrin (420), pour entraîner le déplacement du premier filtre (100) le long de la première direction par au moins une distance prédéfinie par rapport au premier mandrin (410) et au second mandrin (420), pour enrouler au moins une partie du premier filtre (100) sur le second mandrin (420), et entraîner le déplacement du second filtre (110) le long de la première direction par au moins une distance prédéfinie par rapport au premier mandrin (410) et au second mandrin (420), pour remplacer au moins une partie du premier filtre (100) par une partie du second filtre.

4. Système de nettoyage de filtre (10) selon la revendication 3, dans lequel l'ensemble d'adsorption (200) comprend une ventouse (210) et une pompe à vide (220) en communication avec la ventouse (210), la ventouse (210) est fixée sur le cadre (500) et est située sur un côté d'entrée d'air du premier filtre (100), et le moteur (430) est en outre configuré pour entraîner la rotation du premier mandrin (410) ; et
le fait que la sous-unité d'exécution (730) est configurée pour commander l'adsorption de l'ensemble d'adsorption (200) du premier filtre (100) dans une direction vers l'avant comprend :
la sous-unité d'exécution (730) est configurée pour : commander le fonctionnement de la pompe à vide (220) et commander la ventouse (210) afin d'adsorber une première partie de position (W1) du premier filtre (100) pendant un premier temps prédéfini ;
la sous-unité d'exécution (730) est configurée pour commander le fonctionnement du moteur (430), et le moteur (430) entraîne la rotation du second mandrin (420), pour commander le déplacement du premier filtre (100) vers une direction du second mandrin (420), de sorte qu'une deuxième partie de position (W2) du premier filtre (100) chevauche la ventouse (210) ;
la sous-unité d'exécution (730) est en outre configurée pour commander la ventouse (210) afin d'adsorber la deuxième partie de position (W2) du premier filtre (100) pendant le premier temps prédéfini, la première partie de position (W1) du premier filtre (100) est au moins partiellement différent de la deuxième partie de position (W2) du premier filtre (100) ; et
une fois que la ventouse (210) a fini d'adsorber la première partie de position (W1) et la deuxième partie de position (W2), la sous-unité d'exécution (730) est en outre configurée pour commander le moteur (430) afin d'entraîner la rotation du premier mandrin (410), pour commander le déplacement du premier filtre (100) vers une direction du premier mandrin, de sorte que la première partie de position (W1) et la deuxième partie de position (W2) sont situées entre le premier mandrin (410) et le second mandrin (420).

5. Système de nettoyage de filtre (10) selon la revendication 4, dans lequel le cadre (500) comprend en outre une première barre latérale (530) et une seconde barre latérale (540) qui sont disposées de manière opposée sur les deux côtés du premier filtre (100) le long d'une seconde direction, la seconde direction coupe la première direction, deux extrémités de la ventouse (210) le long de la seconde direction sont respectivement fixées sur la première barre latérale (530) et la seconde barre latérale (540), et une longueur de la ventouse (210) le long de la seconde direction est supérieure ou égale à une longueur du premier filtre (100) le long de la seconde direction.

6. Système de nettoyage de filtre (10) selon la revendication 4, dans lequel l'unité de nettoyage de première étape (20) comprend en outre l'ensemble brosse (800), et l'ensemble brosse (800) est disposé sur un côté de la ventouse (210) qui est proche du premier mandrin (410).

7. Système de nettoyage de filtre (10) selon la revendication 3, dans lequel l'ensemble lavage (300) comprend une buse haute pression (310) et une pompe haute pression (320) en communication avec la buse haute pression (310), le la buse haute pression (310) est située sur un côté abrité du premier filtre (100), le moteur (430) est en outre configuré pour entraîner la rotation du premier mandrin (410), et la sous-unité d'exécution (730) est connectée électriquement à la pompe haute pression (320) et commande le fonctionnement de la pompe haute pression (320) ; et
le fait que la sous-unité d'exécution (730) est en outre configurée pour commander l'ensemble lavage (300) pour laver le premier filtre (100) dans une direction inverse comprend :
la sous-unité d'exécution (730) est en outre configurée pour : commander le fonctionnement la pompe haute pression (320), et commander la buse haute pression (310) pour laver une troisième partie de position du premier filtre (100) pour un second temps prédéfini ;
la sous-unité d'exécution (730) est en outre configurée pour commander le fonctionnement du moteur (430), et le moteur (430) entraîne la rotation du second mandrin (420), pour commander le déplacement du premier filtre (100) vers une direction du un second mandrin (420), de sorte que la buse haute pression (310) est alignée avec une quatrième partie de position du premier filtre (100) ;
la sous-unité d'exécution (730) est en outre configurée pour commander la buse haute pression (310) pour laver la quatrième partie de position du premier filtre (100) pendant le second temps prédéfini, la troisième partie de position du premier filtre (100) est au moins partiellement différent de la quatrième partie de position du premier filtre (100) ; et
une fois que la buse haute pression (310) a fini de laver la partie de troisième position et la partie de quatrième position, la sous-unité d'exécution (730) est en outre configurée pour commander le moteur (430) afin d'entraîner la rotation du premier mandrin (410), pour commander le déplacement du premier filtre (100) vers une direction du premier mandrin (410), de sorte que la troisième partie de position et la quatrième partie de position sont situées entre le premier mandrin (410) et le second mandrin (420).

8. Système de nettoyage de filtre (10) selon la revendication 7, dans lequel la sous-unité d'exécution (730) est en outre configurée pour commander le fonctionnement de la pompe haute pression (320), de sorte que la buse haute pression (310) pulvérise du liquide de lavage sur le côté abrité du premier filtre (100) à une vitesse de sortie de liquide prédéfinie.

9. Système de nettoyage de filtre (10) selon la revendication 3, dans lequel l'unité de détection (600) comprend une première sonde (610) et une seconde sonde (620) qui sont respectivement situées sur un côté d'entrée d'air et un côté abrité du premier filtre (100), et la première sonde (610) et la seconde sonde (620) sont fixées sur le cadre (500).

10. Centre de données (1), dans lequel le centre de données (1) comprend une salle informatique (11), un ventilateur (12) et le système de nettoyage de filtre (10) selon l'une quelconque des revendications 1 à 9, le ventilateur (12) et le système de nettoyage de filtre (10) sont situés dans la salle informatique (11), et le premier filtre (100) est disposé sur un côté d'entrée d'air du ventilateur (12).

11. Procédé de nettoyage de filtre, appliqué à un système de nettoyage de filtre (10), dans lequel le système de nettoyage de filtre (10) comprend un premier filtre (100), une unité de nettoyage de première étape (20) et une unité de détection (600), le système de nettoyage de filtre (10) comprend en outre une unité de nettoyage de seconde étape (30), l'unité de nettoyage de première étape (20) comprend au moins l'un d'un ensemble d'adsorption (200) et d'un ensemble lavage (300), l'unité de nettoyage de seconde étape (30) comprend un moteur (430) et un ensemble mandrin (400), l'ensemble mandrin (400) comprend un premier mandrin (410) et un second filtre (110) enroulé sur le premier mandrin, le moteur (430) est configuré pour entraîner le fonctionnement de l'ensemble mandrin (400), pour remplacer au moins une partie du premier filtre (100) par une partie du second filtre, et l'unité de détection est configurée pour obtenir un paramètre de pression de deux côtés de le premier filtre (100) ; et
le procédé de nettoyage de filtre comprend :
l'obtention du paramètre de pression des deux côtés du premier filtre (100) ; et
la commande du fonctionnement, sur la base du paramètre de pression, de l'unité de nettoyage de première étape (20) et/ou l'unité de nettoyage de seconde étape (30) ;
**caractérisé en ce que** l'unité de nettoyage de première étape (20) comprend en outre un ensemble brosse (800), et le système de nettoyage de filtre (10) comprend en outre une unité de commande (700) comprenant une sous-unité d'obtention de pression (710), une sous-unité de détermination (720), et une sous-unité d'exécution (730), la sous-unité de détermination (720) est en connexion de signal avec la sous-unité d'obtention de pression (710) et la sous-unité d'exécution (730), la sous-unité d'obtention de pression (710) est en connexion de signal à l'unité de détection (600), l'unité de nettoyage de première étape (20) comprend l'ensemble d'adsorption (200) et l'ensemble lavage (300), et la sous-unité d'exécution (730) est connectée électriquement à l'ensemble d'adsorption (200) et l'ensemble lavage (300) ; et **en ce que** l'unité de commande (700) est configurée pour commander le fonctionnement, sur la base du paramètre de pression, l'unité de nettoyage de première étape (20) et/ou l'unité de nettoyage de seconde étape (30) comprend :
la sous-unité d'obtention de pression (710) est configurée pour obtenir une première différence de pression entre les deux côtés du premier filtre (100), la sous-unité de détermination (720) est configurée pour déterminer si la première différence de pression est supérieure à une première différence de pression prédéfinie, et lorsque la première différence de pression est supérieure à la première différence de pression prédéfinie, la sous-unité d'exécution (730) est configurée pour commander l'adsorption de l'ensemble d'adsorption (200) du premier filtre (100) dans une direction vers l'avant, afin d'éliminer la saleté ; et
la sous-unité d'obtention de pression (710) est en outre configurée pour obtenir une deuxième différence de pression entre les deux côtés du premier filtre (100) après la fin de l'adsorption, la sous-unité de détermination (720) est en outre configurée pour déterminer si la deuxième différence de pression est supérieure à une deuxième différence de pression prédéfinie après la fin de l'adsorption, et lorsque la deuxième différence de pression est supérieure à la deuxième différence de pression prédéfinie, la sous-unité d'exécution (730) est en outre configurée pour commander l'ensemble lavage (300) afin de laver le premier filtre (100) dans une direction inverse, dans lequel la deuxième différence de pression prédéfinie est inférieure ou égale à la première différence de pression prédéfinie.

12. Procédé de nettoyage de filtre selon la revendication 11, dans lequel l'unité de nettoyage de première étape (20) comprend l'ensemble d'adsorption (200) et l'ensemble lavage (300), et l'obtention du paramètre de pression des deux côtés du premier filtre (100) comprend :
l'obtention (S110) d'une première différence de pression entre les deux côtés du premier filtre (100) ;
la commande du fonctionnement, sur la base du paramètre de pression, de l'unité de nettoyage de première étape (20) et/ou de l'unité de nettoyage de second étape (30) comprend :
la détermination (S210) du fait de savoir si la première différence de pression est supérieure à une première différence de pression prédéfinie ; et
lorsque la première différence de pression est supérieure à la première différence de pression prédéfinie, la commande (S220) de l'adsorption de l'ensemble d'adsorption (200) du premier filtre (100) dans une direction vers l'avant, afin d'éliminer la saleté ;
l'obtention du paramètre de pression des deux côtés du premier filtre (100) comprend en outre :
l'obtention (S120) d'une deuxième différence de pression entre les deux côtés du premier filtre (100) après la fin de l'adsorption ;
et
la commande du fonctionnement, sur la base du paramètre de pression, de l'unité de nettoyage de première étape (20) et/ou de l'unité de nettoyage de seconde étape (30) comprend en outre :
la détermination (S230) du fait de savoir si la deuxième différence de pression est supérieure à une deuxième différence de pression prédéfinie, la deuxième différence de pression prédéfinie étant inférieure ou égale à la première différence de pression prédéfinie ; et
lorsque la deuxième différence de pression est supérieure à la deuxième différence de pression prédéfinie, la commande (S240) de l'ensemble lavage (300) afin de laver le premier filtre (100) dans le sens inverse.

13. Procédé de nettoyage de filtre selon la revendication 12, dans lequel l'obtention du paramètre de pression des deux côtés du premier filtre (100) comprend :
l'obtention (S130) d'une troisième différence de pression entre les deux côtés du premier filtre (100) ; et
la commande du fonctionnement, sur la base du paramètre de pression, de l'unité de nettoyage de première étape (20) et/ou de l'unité de nettoyage de second étape (30) comprend :
la détermination (S260) du fait de savoir si la troisième différence de pression est supérieure à une troisième différence de pression prédéfinie, la troisième différence de pression prédéfinie étant inférieure ou égale à la deuxième différence de pression prédéfinie ; et
lorsque la troisième différence de pression est supérieure à la troisième différence de pression prédéfinie, la commande (S270) du fonctionnement du moteur (430) pour entraîner l'ensemble mandrin (400), pour remplacer au moins une partie du premier filtre (100) par une partie du second filtre.

14. Procédé de nettoyage de filtre selon la revendication 12, dans lequel lorsque la deuxième différence de pression est inférieure ou égale à la deuxième différence de pression prédéfinie, le nettoyage se termine (S250).
